# EUROPEAN PATENT APPLICATION

(11) **EP 4 579 646 A1**
(43) Date of publication of application: **02.07.2025**
(21) Application number: 24178751.4
(22) Date of filing: 29.05.2024
(51) Int. Cl.: G09G 5/00

(54) **INTERFACE DEVICE AND IMAGE DISPLAY APPARATUS INCLUDING THE SAME**

(30) Priority: 27.12.2023 KR 20230193428
(71) Applicant: LG Electronics Inc., Yeongdeungpo-gu Seoul 07336 (KR)
(72) Inventor: CHOI, Jinwoo, 06772 Seoul (KR); SHIM, Wookjin, 06772 Seoul (KR)
(74) Representative: Vossius & Partner Patentanwälte Rechtsanwälte mbB

(57) **Abstract**

An interface device and an image display apparatus including the same are disclosed. The image display apparatus according to an embodiment of the present disclosure comprises: a display; an interface including at least one port and to receive a video signal from an external electronic device connected to the port; and a signal processing device to display an image corresponding to the video signal received from the interface on the display, wherein in a first mode of a first transmission mode, the interface is configured to turn on some lane and turn off other lanes, generate update time information of an image frame based on data received through the some lane, and maintain encryption authentication based on the update time information. Accordingly, power consumption may be reduced while maintaining encryption authentication.

## Description

### BACKGROUND

### 1. Field

This disclosure relates to an interface device and an image display apparatus including the same, and more particularly to an interface device capable of reducing power consumption while maintaining encryption authentication, and an image display apparatus including the interface device.

### 2. Description of the Related Art

An image display apparatus is an apparatus capable of displaying various images.

Meanwhile, the image display apparatus may receive a video signal from an external electronic device through an interface and the like, and may display an image corresponding to the video signal.

For example, if a plurality of external electronic devices are connected to the image display apparatus, the image display apparatus may display an image corresponding to a video signal received from a first electronic device, and then, in response to external input switching, may display an image corresponding to a video signal received from a second electronic device.

In another example, if a plurality of external electronic devices are connected to the image display apparatus, the image display apparatus may display an image corresponding to a video signal received from a second electronic device, and then, in response to external input switching, may display an image corresponding to a video signal received from a first electronic device.

Meanwhile, encryption authentication is required when a video signal is received from an external electronic device, and if the encryption authentication is performed again in response to external input switching and the like, there is a drawback in that encryption authentication takes a considerable amount of time.

### SUMMARY

It is an object of the present disclosure to provide an interface device capable of reducing power consumption while maintaining encryption authentication, and an image display apparatus including the interface device.

It is another object of the present disclosure to provide an interface device capable of rapidly performing external input switching, and an image display apparatus including the interface device.

In order to achieve the above and other objects, an image display apparatus according to an embodiment of the present disclosure comprises: a display; an interface including at least one port and configured to receive a video signal from an external electronic device connected to the port; and a signal processing device configured to display an image corresponding to the video signal received from the interface on the display, wherein in a first mode of a first transmission mode, the interface is configured to turn on some lane and turn off other lanes among a plurality of lanes, generate update time information of an image frame based on data received through the some lane, and maintain encryption authentication based on the update time information of the image frame.

Meanwhile, in the first mode of the first transmission mode, the interface may be configured to turn on some lane and turn off other lanes among a plurality of lanes, generate update time information of the image frame based on header data among the data received through the some lane, and maintain encryption authentication based on the update time information of the image frame.

Meanwhile, in the first mode of the first transmission mode, the interface may be configured to turn on some lane and turn off other lanes among a plurality of lanes, generate update time information of the image frame based on map character information in data received through the some lane, and maintain encryption authentication based on the update time information of the image frame.

Meanwhile, in the first mode of the first transmission mode, the interface may be configured to turn on a first lane and turn off other lanes among a plurality of lanes, generate update time information of the image frame based on map character information in header data received through the first lane, and maintain encryption authentication based on the update time information of the image frame.

Meanwhile, in response to the encryption authentication being failed, the interface may be configured to perform encryption authentication again.

Meanwhile, the interface may be configured to: in response to the encryption authentication being failed or at a time of initial authentication, transmit a first public key to the external electronic device; receive a second public key from the external electronic device; generate a secure key based on the second public key; and encrypt a message based on the secure key and transmit the encrypted message to the external electronic device.

Meanwhile, in a second mode of the first transmission mode, the interface may be configured to turn on all the plurality of lanes, and maintain encryption authentication based on image data received through the plurality of lanes.

Meanwhile, the interface may be configured to operate with less power in the first mode of the first transmission mode than in the second mode of the first transmission mode.

Meanwhile, while operating in a first mode of operation during a second transmission mode, the interface may be configured to turn off all the plurality of lanes, and maintain encryption authentication based on previously stored vertical sync signal information or frame rate information.

Meanwhile, in a second mode of the second transmission mode, the interface may be configured to maintain encryption authentication based on at least one of a video signal or a clock signal received through the plurality of lanes.

Meanwhile, the interface may be configured to operate with less power in the first mode of the second transmission mode than in the second mode of the second transmission mode.

Meanwhile, the interface may be configured to receive higher resolution image data in the first transmission mode than in the second transmission mode.

Meanwhile, the interface may include: a decoder configured to decode data received from the some lane in the first mode of the first transmission mode; a descrambler configured to descramble data from the decoder; an update time detector configured to generate update time information of an image frame based on data from the descrambler; a sync signal generator configured to output a sync signal and an encryption enable signal based on the update time information of the image frame from the update time detector; and a encryption authenticator configured to maintain or perform encryption authentication again based on the sync signal and the encryption enable signal from the sync signal generator.

Meanwhile, the interface may further include: a second decoder configured to decode data from the plurality of lanes in the second mode of the first transmission mode; a second descrambler configured to descramble data from the second decoder; an unpacker configured to unpack data from the second descrambler; and a deframer configured to deframe data from the unpacker, wherein in the second mode of the first transmission mode, the encryption authenticator may be configured to maintain or perform encryption authentication again based on the image data and the sync signal from the deframer.

Meanwhile, in the first mode of the first transmission mode, the interface may be configured to turn on the first lane and turn off other lanes among the plurality of lanes, and perform frame counting based on header data received through the first lane.

Meanwhile, in the second mode of the first transmission mode, the interface may be configured to turn on the plurality of lanes, separate pixel data and gap data among data received through the plurality of lanes, and store sync information generated based on the pixel data.

Meanwhile, in the first mode of the first transmission mode, the interface may be configured to generate a first vertical sync signal based on the received data and output the first vertical sync signal; and in response to switching from the first mode of the first transmission mode to the second mode of the first transmission mode, the interface may be configured to bypass a first vertical sync signal, which is output after the switching, or a final first vertical sync signal.

Meanwhile, the interface may be configured to: in the first mode of the first transmission mode, generate a first vertical sync signal based on the received data and output the first vertical sync signal; and in the second mode of the first transmission mode, extract a second vertical sync signal based on image data received through the plurality of lanes, wherein a pulse width of the first vertical sync signal may be less than a pulse width of the second vertical sync signal.

Meanwhile, an image display apparatus according to another embodiment of the present disclosure comprises: a display; an interface including at least one port, and configured to receive a video signal from an external electronic device connected to the port; and a signal processing device configured to display an image corresponding to the video signal received from the interface on the display, wherein the interface is configured to: in a first mode of a first transmission mode, maintain encryption authentication based on data received through some lanes among a plurality of lanes; and in a second mode of the first transmission mode, maintain encryption authentication based on image data received through the plurality of lanes.

Meanwhile, an interface device according to yet another embodiment of the present disclosure comprises: a decoder configured to decode data received from some lane among a plurality of lanes in a first mode of a first transmission mode; a descrambler configured to descramble data from the decoder; an update time detector configured to generate update time information of an image frame based on data from the descrambler; a sync signal generator configured to output a sync signal and an encryption enable signal based on the update time information of the image frame from the update time detector; and a encryption authenticator configured to maintain or perform encryption authentication again based on the sync signal and the encryption enable signal from the sync signal generator

Meanwhile, the interface device may further include: a second decoder configured to decode data from the plurality of lanes in a second mode of the first transmission mode; a second descrambler configured to descramble data from the second decoder; an unpacker configured to unpack data from the second descrambler; and a deframer configured to deframe data from the unpacker, wherein in the second mode of the first transmission mode, the encryption authenticator may be configured to maintain or perform encryption authentication again based on the image data and the sync signal from the deframer.

### BRIEF DESCRIPTION OF THE DRAWINGS

FIG. 1 is a diagram illustrating an image display system according to an embodiment of the present disclosure;
FIG. 2 is an exemplary internal block diagram of an image display apparatus of FIG. 1;
FIG. 3 is an exemplary internal block diagram of a signal processing device of FIG. 2;
FIG. 4A is a diagram illustrating a method for controlling a remote controller illustrated in FIG. 2;
FIG. 4B is an internal block diagram of the remote controller illustrated in FIG. 2;
FIG. 5 is an exemplary internal block diagram of an image display apparatus according to an embodiment of the present disclosure;
FIGS. 6A to 7B are diagrams referred to in the description of FIG. 5;
FIG. 8A is a flowchart illustrating an operating method of an image display apparatus according to an embodiment of the present disclosure;
FIG. 8B is a flowchart illustrating an example of an authentication method of FIG. 8A;
FIGS. 8C and 8D are flowcharts illustrating an operating method of an image display apparatus associated with the present disclosure;
FIGS. 9A and 9B are diagrams illustrating various external input images displayed on an image display apparatus according to an embodiment of the present disclosure;
FIG. 10A is a flowchart illustrating an operating method of an image display apparatus according to an embodiment of the present disclosure;
FIGS. 10B to 10E are flowcharts illustrating an operating method of an image display apparatus according to various embodiments of the present disclosure; and
FIGS. 11A to 16 are diagrams referred to in the description of FIGS. 10A to 10E.

### DETAILED DESCRIPTION OF THE PREFERRED EMBODIMENTS

Hereinafter, the present disclosure will be described in further detail with reference to the accompanying drawings.

With respect to constituent elements used in the following description, suffixes "module" and "unit" are given only in consideration of ease in the preparation of the specification, and do not have or serve as different meanings. Accordingly, the suffixes "module" and "unit" may be used interchangeably.

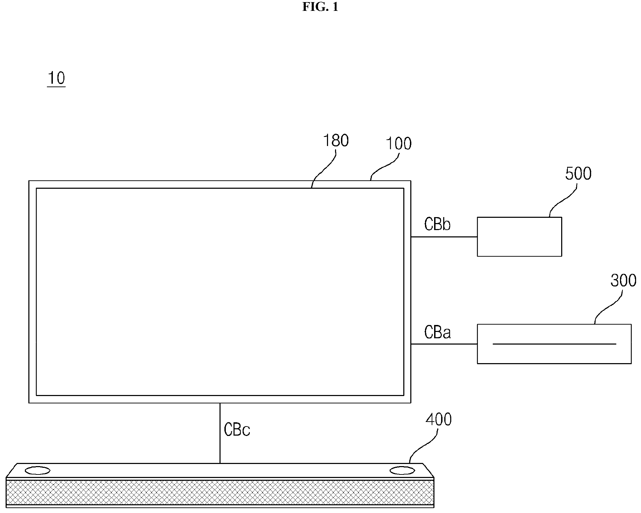

FIG. 1 is a diagram illustrating an image display system according to an embodiment of the present disclosure.

Referring to the drawing, an image display system 10 according to an embodiment of the present disclosure may include an image display apparatus 100 including a display 180, and at least one external electronic device 300, 400, and 500 connected by wire to the image display apparatus 100.

For example, the at least one external electronic device 300, 400, and 500 may be a set-top box 300, a gaming device 500, or a sound output device 400.

In another example, the at least one external electronic device 300, 400, and 500 may be a laptop computer, a tablet PC, a mobile terminal, and the like.

In the drawing, an example is illustrated in which the set-top box 300 is connected to the image display apparatus 100 through a first cable CBa, the gaming device 500 is connected to the image display apparatus 100 through a second cable CBb, and the sound output device 400 is connected to the image display apparatus 100 through a third cable CBc.

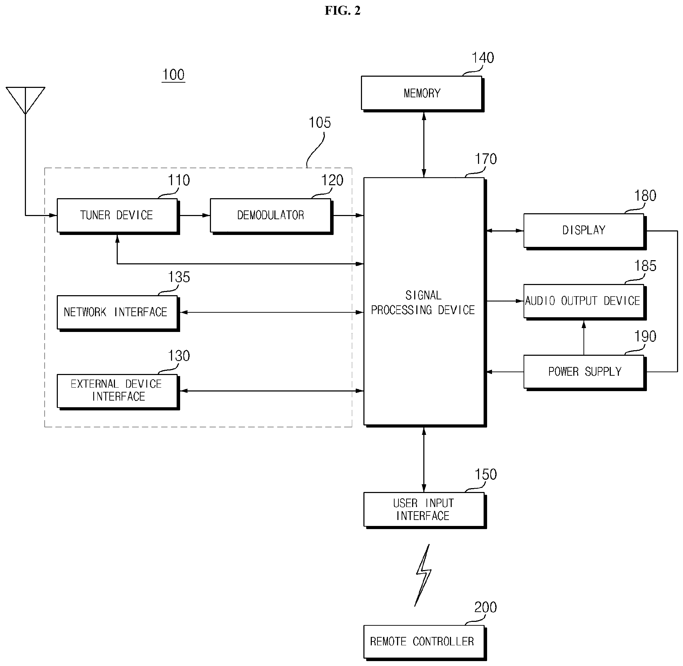

Meanwhile, the image display apparatus 100 according to an embodiment of the present disclosure may include a display 180 and an interface 130 (see FIG. 2) having at least one port, and a signal processing device 170 configured to display an image corresponding to a video signal from an external electronic device connected to the at least one port, to be displayed on the display 180.

Meanwhile, in a first mode of a first transmission mode, the interface 130 according to an embodiment of the present disclosure may turn on only some of a plurality of lanes, may generate update time information of an image frame based on data received through some lanes that are in an on-state, and may maintain encryption authentication based on the update time information of the image frame. Accordingly, power consumption may be reduced while maintaining encryption authentication. Further, external input switching may be rapidly performed.

Meanwhile, in a first mode of a first transmission mode, the interface 130 according to another embodiment of the present disclosure may turn on some of a plurality of lanes and may maintain encryption authentication based on data received through some lanes that are in an on-state, and in a second mode of the first transmission mode, the interface 130 may maintain encryption authentication based on image data received through the plurality of lanes. Accordingly, power consumption may be reduced while maintaining encryption authentication. Further, external input switching may be rapidly performed.

Meanwhile, the image display apparatus 100 shown in FIG. 1 may be a TV, a monitor, a tablet PC, a mobile device, etc.

FIG. 2 is a block diagram of the image display apparatus shown in FIG. 1.

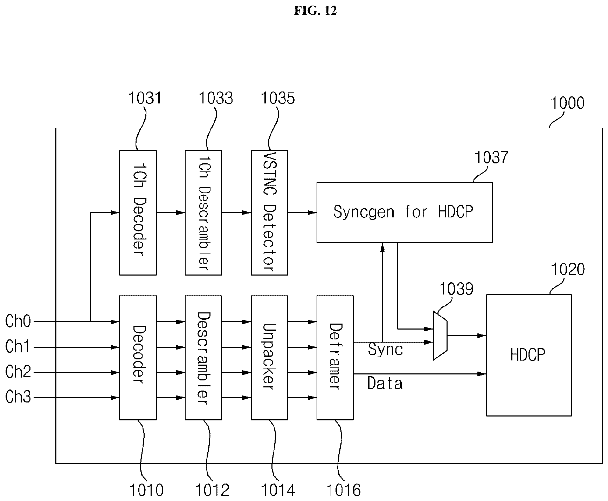

Referring to FIG. 2, the image display apparatus 100 according to an embodiment of the present disclosure may include an image receiver 105, an external device interface 130, a memory 140, a user input interface 150, a sensor device 1220 (see FIG. 12), a signal processing device 170, a display 180, and an audio output device 185.

The image receiver 105 may comprise a tuner device 110, a demodulator 120, a network interface 135, and an external device interface 130.

Unlike FIG. 2, the image receiver 105 may comprise only the tuner device 110, the demodulator 120, and the external device interface 130. That is, the image receiver 105 may not include the network interface 135.

The tuner device 110 selects a Radio Frequency (RF) broadcast signal corresponding to a channel selected by a user or an RF broadcast signal corresponding to each of previously stored channels from among a plurality of RF broadcast signals received through an antenna (not shown). In addition, the tuner device 110 downconverts the selected RF broadcast signal into an Intermediate Frequency (IF) signal or a baseband Audio/Video (A/V) signal.

For example, if the selected RF broadcast signal is a digital broadcast signal, the tuner device 110 downconverts the selected RF broadcast signal into a digital IF signal. On the other hand, if the selected RF broadcast signal is an analog broadcast signal, the tuner device 110 downconverts the selected RF broadcast signal into an analog baseband A/V signal (CVBS/SIF). That is, the tuner device 110 may process a digital broadcast signal or an analog broadcast signal. The analog basebandA/V signal, CVBS/SIF from the tuner device 110 may be provided directly to the signal processing device 170.

Meanwhile, the tuner device 110 may comprise a plurality of tuners for receiving broadcast signals of a plurality of channels, or a single tuner for simultaneously receiving broadcast signals of a plurality of channels.

The demodulator 120 receives the digital IF signal from the tuner device 110 and demodulates the digital IF signal.

The demodulator 120 may perform demodulation and channel decoding on the digital IF signal, thereby obtaining a stream signal TS. The stream signal TS may be a signal in which an image signal, an audio signal and/or a data signal are multiplexed.

The stream signal output from the demodulator 120 may be input to the signal processing device 170 and then subjected to demultiplexing and A/V signal processing. The signal processing device 170 outputs the processed video and audio signals to the display 180 and the audio output device 185, respectively.

The external device interface 130 may transmit and receive data to and from a connected external device (not shown) such as a set-top box. For this purpose, the external device interface 130 may comprise an A/V Input/Output (I/O) device (not shown).

The external device interface 130 may be connected to an external device, wirelessly or by wire, such as a Digital Versatile Disk (DVD) player, a Blu-ray Disk (BD) player, a game console, a camera, a camcorder, a computer (e.g. a laptop computer), or a set-top box. Then, the external device interface 130 may transmit and receive signals to and from the external device.

The A/V input and output device may receive audio and image signals from an external device, and a wireless communicator (not shown) may conduct short-range wireless communication with another electronic device.

The external device interface 130 may exchange data with a nearby mobile terminal 600 through the wireless communicator (not shown). Particularly, the external device interface 130 may receive device information, executed application information, an application image, and so on from the mobile terminal 600 in a mirroring mode.

The network interface 135 serves as an interface between the image display apparatus 100 and a wired/wireless network such as the Internet. For example, the network interface 135 may receive content or data from the Internet or from a Content Provider (CP) or a Network Provider (NP) over a network.

Meanwhile, the network interface 135 may comprise a wireless communicator (not shown).

The memory 140 may store programs necessary for the signal processing device 170 to process signals and control, and may also store a signal-processed image, audio, or data signal.

In addition, the memory 140 may also temporarily store an audio, video or data signal received from the external device interface 130. The memory 140 may store information about broadcast channels by the channel-add function.

While the memory 140 is shown in FIG. 2 as configured separately from the signal processing device 170, to which the present disclosure is not limited, the memory 140 may be incorporated into the signal processing device 170.

The user input interface 150 transmits a signal received from the user to the signal processing device 170 or transmits a signal received from the signal processing device 170 to the user.

For example, the user input interface 150 may transmit/receive user input signals, such as a power-on/off signal, a channel selection signal, a screen setting signal, etc., to/from a remote controller 200, may provide the signal processing device 170 with user input signals received from local keys (not shown), such as inputs of a power key, a channel key, a volume key, a setting value, etc., may transmit a user input signal, received from the sensor device 1220 (see FIG. 12) that senses a user gesture, to the signal processing device 170, or may transmit a signal received from the signal processing device 170 to the sensor device 1220 (see FIG. 12).

The signal processing device 170 may demultiplex a stream signal received from the tuner device 110, the demodulator 120, the network interface 135, or the external device interface 130 into a number of signals, and process the demultiplexed signals into audio and image signals.

For example, the signal processing device 170 may receive a broadcast signal or an HDMI signal received by the image receiver 105, and output a processed image signal by processing the received broadcast signal or the received HDMI signal.

The image signal processed by the signal processing device 170 may be displayed as an image corresponding to the image signal on the display 180. The image signal processed by the signal processing device 170 may also be transmitted to an external output device through the external device interface 130.

The audio signal processed by the signal processing device 170 may be output to the audio output device 185. Also, the audio signal processed by the signal processing device 170 may be transmitted to an external output device through the external device interface 130.

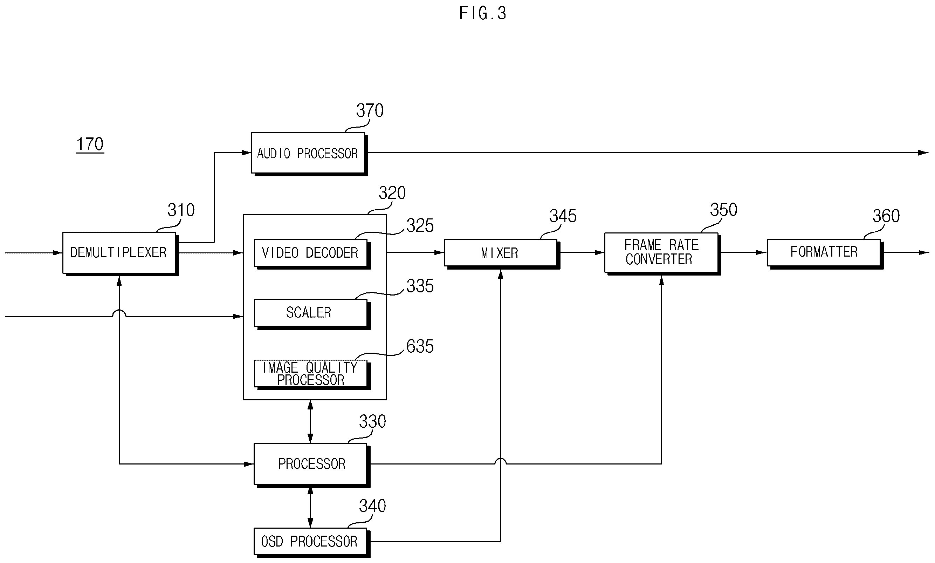

While not shown in FIG. 2, the signal processing device 170 may comprise a Demultiplexer (DEMUX) and a video processor, which will be described later with reference to FIG. 3. That is, the signal processing device 170 may process various types of signals and accordingly may be implemented in the form of a system On Chip (SOC). It will be described in more detail with reference to FIG. 3.

In addition, the signal processing device 170 may provide overall control to the image display apparatus 100. For example, the signal processing device 170 may control the tuner device 110 to select an RF broadcast signal corresponding to a user-selected channel or a previously stored channel.

The signal processing device 170 may control the image display apparatus 100 according to a user command received through the user input interface 150 or according to an internal program.

The signal processing device 170 may control the display 180 to display an image. The image displayed on the display 180 may be a Two-Dimensional (2D) or Three-Dimensional (3D) still image or video.

The signal processing device 170 may control a particular 2D object in the image displayed on the display 180. For example, the particular 2D object may be at least one of a linked Web page (e.g., from a newspaper or a magazine), an Electronic Program Guide (EPG), a menu, a widget, an icon, a still image, a video, or text.

The signal processing device 170 may locate the user based on an image captured by a camera device (not shown). For example, the signal processing device 170 may determine the distance (a z-axis coordinate) between the user and the image display apparatus 100. In addition, the signal processing device 170 may determine x-axis and y-axis coordinates corresponding to the position of the user on the display 180.

The display 180 generates drive signals by converting a processed image signal, a processed data signal, an On Screen Display (OSD) signal, and a control signal received from the signal processing device 170 or an image signal, a data signal, and a control signal received from the external device interface 130.

Meanwhile, the display 180 may also be a touch screen that can be used not only as an output device but also as an input device.

The audio output device 185 may receive a processed audio signal from the signal processing device 170 and output the received audio signal as voice.

The camera device (not shown) captures a user. The camera device may comprise, but not limited to, a single camera. When needed, the camera device may comprise a plurality of cameras. Image information captured by the camera device may be provided to the signal processing device 170.

The signal processing device 170 may sense a user's gesture from a captured image received from the camera device (not shown) or from signals received from the sensor device 1220 (see FIG. 12) alone or in combination.

A power supply 190 supplies power across the whole image display apparatus 100. Particularly, the power supply 190 may supply power to the signal processing device 170 which may be implemented as a System On Chip (SOC), the display 180 for displaying an image, the audio output device 185 for outputting an audio signal, and so on.

Specifically, the power supply 190 may comprise a converter for converting Alternating Current (AC) power to Direct Current (DC) power, and a DC/DC converter for converting the level of DC power.

The remote controller 200 transmits a user input to the user input interface 150. For the transmission of a user input, the remote controller 200 may operate based on various communication standards such as Bluetooth, RF communication, IR communication, Ultra WideBand (UWB), and ZigBee. In addition, the remote controller 200 may receive an image signal, an audio signal and/or a data signal from the user input interface 150 and may output the received signal as an image or sound.

The above-described image display apparatus 100 may be a fixed or mobile digital broadcast receiver.

Meanwhile, a block diagram of the image display apparatus 100 shown in FIG. 2 is a block diagram for an embodiment of the present disclosure. Each component of the block diagram may be integrated, added, or omitted according to a specification of the image display apparatus 100 actually implemented. That is, two or more components may be combined into a single component as needed, or a single component may be divided into two or more components. The function performed in each block is described for the purpose of illustrating embodiments of the present disclosure, and specific operation and apparatus do not limit the scope of the present disclosure.

FIG. 3 is a block diagram of the signal processing device illustrated in FIG. 2.

Referring to FIG. 3, the signal processing device 170 may comprise a DEMUX 310, an image processor 320, a processor 330, and an audio processor 370. The signal processing device 170 may further comprise a data processor (not shown).

The DEMUX 310 demultiplexes an input stream. For example, the DEMUX 310 may demultiplex an MPEG-2 TS into an image signal, an audio signal, and a data signal. The input stream signal may be received from the tuner device 110, the demodulator 120, or the external device interface 130.

The image processor 320 may perform signal processing based on a received image. For example, the image processor 320 may perform image processing based on an image signal demultiplexed by the DEMUX 310.

To this end, the image processor 320 may comprise a video decoder 325, a scaler 335, an image quality processor 635, a video encoder (not shown), an OSD processor 340, a Fame Rate Converter (FRC) 350, a formatter 360, etc.

The video decoder 325 decodes the demultiplexed image signal, and the scaler 335 scales resolution of the decoded image signal so that the image signal may be displayed on the display 180.

The video decoder 325 may be provided with decoders that operate in conformance to various standards. For example, the video decoder 325 may comprise, for example, an MPEG-2 decoder, an H.264 decoder, a 3D video decoder for a color image, a depth image, a decoder for multi-view images, and so on.

The scaler 335 may scale a received image signal which is decoded by the video decoder 325.

For example, when the size or resolution of a received image signal is small and low, the scaler 335 may upscale the received image signal. When the size or resolution of a received image signal is great and high, the scaler 335 may downscale the received image signal.

The image quality processor 635 may perform image quality processing based on a received image signal which is decoded by the video decoder 325.

For example, the image quality processor 635 may reduce noise of a received image signal, extend resolution of grayscale of the received image signal, enhance image resolution, perform High Dynamic Range (HDR)-based signal processing, change a frame rate, or perform image quality processing to corresponding to characteristics of a panel.

The OSD processor 340 generates an OSD signal autonomously or according to a user input. For example, the OSD processor 340 may generate signals by which a variety of information is displayed as graphics or text on the display 180, according to user input signals. The OSD signal may comprise various data such as a User Interface (UI), a variety of menus, widgets, and icons. The generated OSD signal may comprise a 2D or 3D object.

Further, the OSD processor 340 may generate a pointer to be displayed on the display 180 based on a pointing signal received from the remote controller 200. Especially, the pointer may be generated from a pointing signal processing device (not shown), which may reside in the OSD processor 340. Obviously, the pointing signal processing device may be configured separately from the OSD processor 240.

The FRC 350 may change the frame rate of the received image signal or simply output the image signal without frame rate conversion.

The formatter 360 may change the format of a received image signal to an image signal to be displayed on the display.

Particularly, the formatter 360 may change the format of a received image signal to correspond to characteristics of a display panel.

Meanwhile, the formatter 360 may change the format of an image signal. For example, the formatter 360 may change the format of a 3D image signal to one of various 3D formats such as a side by side format, a top/down format, a frame sequential format, an interlaced format, and a checker format.

The processor 330 may control overall operations in the image display apparatus 100 or the signal processing device 170.

For example, the processor 330 may control the tuner device 110 to tune to an RF broadcast signal corresponding to a user-selected channel or a previously stored channel.

The processor 330 may control the image display apparatus 100 according to a user command received through the user input interface 150 or according to an internal program.

In addition, the processor 330 may control data transmission through the network interface 135 or the external device interface 130.

In addition, the processor 330 may control operations of the DEMUX 310 and the image processor 320 in the signal processing device 170.

The audio processor 370 of the signal processing device 170 may process the demultiplexed audio signal. For the audio signal processing, the audio processor 370 may have a plurality of decoders.

The audio processor 370 of the signal processing device 170 may also adjust the bass, treble, and volume of the audio signal.

The data processor (not shown) of the signal processing device 170 may process the data signal obtained by demultiplexing the input stream signal. For example, if the demultiplexed data signal is a coded data signal, the data processor may decode the coded data signal. The coded data signal may be an EPG which includes broadcasting information specifying the start time, end time, and the like of a scheduled broadcast program of each channel.

Meanwhile, the block diagram of the signal processing device 170 illustrated in FIG. 3 is purely exemplary. Depending upon the specifications of the signal processing device 170 in actual implementation, the components of the signal processing device 170 may be combined or omitted or new components may be added.

In particular, the FRC 350 and the formatter 360 may be provided separately from the image processor 320.

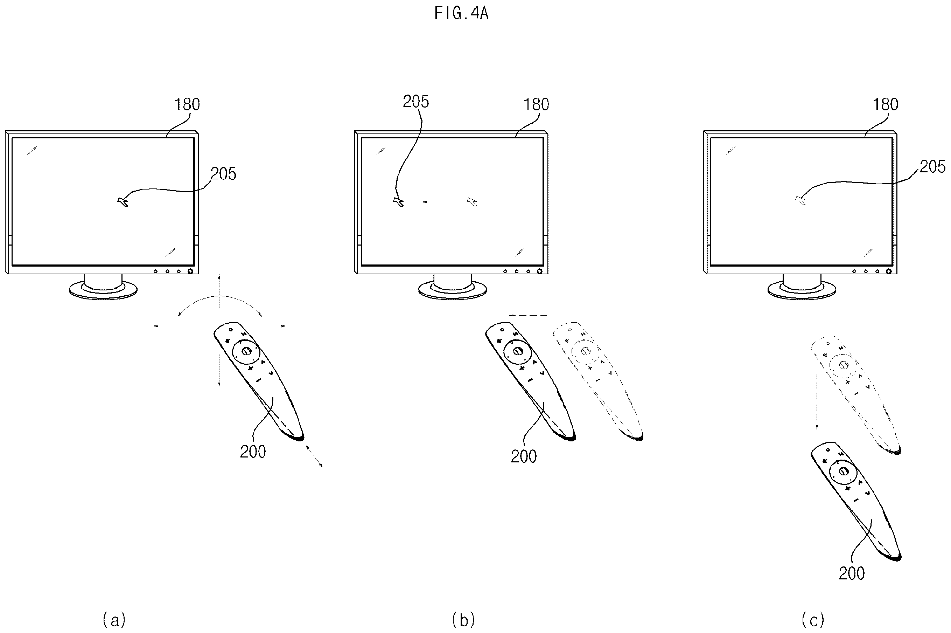

FIG. 4A is a diagram illustrating a method for controlling the remote controller illustrated in FIG. 2.
(a) of FIG. 4A illustrates a pointer 205 representing movement of the remote controller 200, displayed on the display 180.

The user may move or rotate the remote controller 200 up and down, side to side ((b) of FIG. 4A), and back and forth ((c) of FIG. 4A). The pointer 205 displayed on the display 180 corresponds to movement of the remote controller 200. Since the pointer 205 moves in accordance with the movement of the remote controller 200 in a 3D space, the remote controller 200 may be referred to as a remote controller 200 or a 3D pointing device.

Referring to (b) of FIG. 4A, if the user moves the remote controller 200 to the left, the pointer 205 moves to the left on the display 180.

A sensor of the remote controller 200 detects the movement of the remote controller 200 and transmits motion information corresponding to the result of the detection to the image display apparatus. Then, the image display apparatus may calculate coordinates of the pointer 205 based on the motion information of the remote controller 200. The image display apparatus then displays the pointer 205 at the calculated coordinates.

Referring to (c) of FIG. 4A, while pressing a predetermined button of the remote controller 200, the user moves the remote controller 200 away from the display 180. Then, a selected area corresponding to the pointer 205 may be zoomed in and enlarged on the display 180. On the contrary, if the user moves the remote controller 200 toward the display 180, the selection area corresponding to the pointer 205 is zoomed out and thus contracted on the display 180. On the other hand, when the remote controller 200 moves away from the display 180, the selection area may be zoomed out and when the remote controller 200 approaches the display 180, the selection area may be zoomed in.

With the predetermined button pressed in the remote controller 200, the up, down, left and right movements of the remote controller 200 may be ignored. That is, when the remote controller 200 moves away from or approaches the display 180, only the back and forth movements of the remote controller 200 are sensed, while the up, down, left and right movements of the remote controller 200 are ignored. Unless the predetermined button is pressed in the remote controller 200, the pointer 205 moves in accordance with the up, down, left or right movement of the remote controller 200.

The speed and direction of the pointer 205 may correspond to the speed and direction of the remote controller 200.

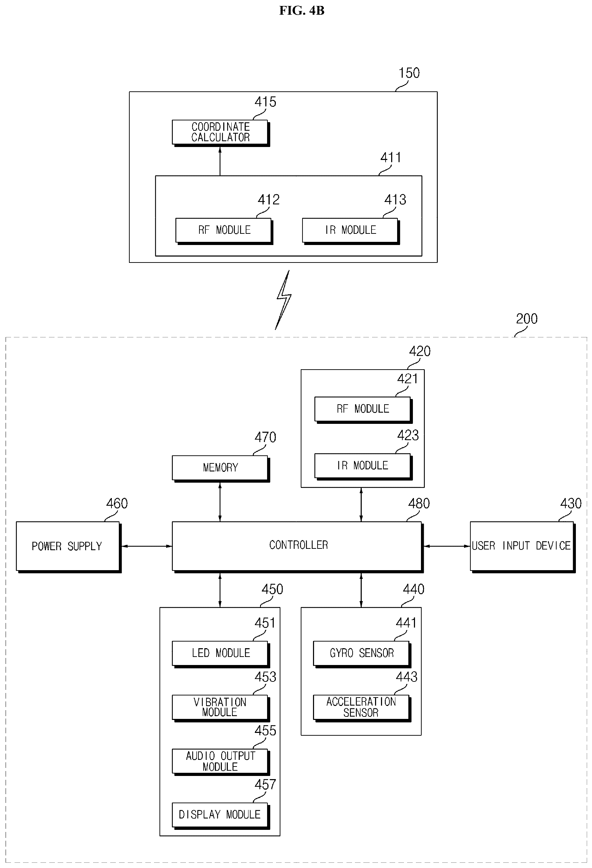

FIG. 4B is a block diagram of the remote controller illustrated in FIG. 2.

Referring to FIG. 4B, the remote controller 200 may comprise a wireless communicator 425, a user input device 435, a sensor device 440, an output device 450, a power supply 460, a memory 470, and a controller 480.

The wireless communicator 425 transmits signals to and/or receives signals from one of image display apparatuses according to embodiments of the present disclosure. One of the image display apparatuses according to embodiments of the present disclosure, that is, the image display apparatus 100 will be taken as an example.

In this embodiment, the remote controller 200 may comprise an RF module 421 for transmitting RF signals to and/or receiving RF signals from the image display apparatus 100 according to an RF communication standard. Further, the remote controller 200 may comprise an IR module 423 for transmitting IR signals to and/or receiving IR signals from the image display apparatus 100 according to an IR communication standard.

In this embodiment, the remote controller 200 may transmit a signal carrying information about movement of the remote controller 200 to the image display apparatus 100 through the RF module 421.

Further, the remote controller 200 may receive signals from the image display apparatus 100 through the RF module 421. The remote controller 200 may transmit commands, such as a power on/off command, a channel switching command, or a sound volume change command, to the image display apparatus 100 through the IR module 423, as needed.

The user input device 435 may comprise a keypad, a plurality of buttons, a touch pad, or a touch screen. The user may enter commands to the image display apparatus 100 by manipulating the user input device 435. If the user input device 435 includes a plurality of hard-key buttons, the user may input various commands to the image display apparatus 100 by pressing the hard-key buttons. If the user input device 435 includes a touch screen displaying a plurality of soft keys, the user may input various commands to the image display apparatus 100 by touching the soft keys. The user input device 435 may also include various input tools other than those set forth herein, such as a scroll key and/or a jog key, which should not be construed as limiting the present disclosure.

The sensor device 440 may comprise a gyro sensor 441 and/or an acceleration sensor 443. The gyro sensor 441 may sense the movement of the remote controller 200.

For example, the gyro sensor 441 may sense motion information about the remote controller 200 in X-, Y-, and Z-axis directions. The acceleration sensor 443 may sense the moving speed of the remote controller 200. The sensor device 440 may further comprise a distance sensor for sensing the distance between the remote controller 200 and the display 180.

The output device 450 may output a video and/or audio signal corresponding to a manipulation of the user input device 435 or a signal transmitted by the image display apparatus 100. The user may easily identify whether the user input device 435 has been manipulated or whether the image display apparatus 100 has been controlled based on the video and/or audio signal output from the output device 450.

For example, the output device 450 may comprise an LED module 451 which is turned on or off whenever the user input device 435 is manipulated or whenever a signal is received from or transmitted to the image display apparatus 100 through the wireless communicator 425, a vibration module 453 which generates vibrations, an audio output module 455 which outputs audio data, or a display module 457 which outputs an image.

The power supply 460 supplies power to the remote controller 200. If the remote controller 200 is kept stationary for a predetermined time or longer, the power supply 460 may, for example, cut off supply of power to the remote controller 200 in order to save power. The power supply 460 may resume supply of power if a specific key on the remote controller 200 is manipulated.

The memory 470 may store various programs and application data for controlling or operating the remote controller 200. The remote controller 200 may wirelessly transmit signals to and/or receive signals from the image display apparatus 100 in a predetermined frequency band through the RF module 421. The controller 480 of the remote controller 200 may store information regarding the frequency band used for the remote controller 200 to wirelessly transmit signals to and/or wirelessly receive signals from the paired image display apparatus 100 in the memory 470 and may then refer to this information for use at a later time.

The controller 480 provides overall control to the remote controller 200. For example, the controller 480 may transmit a signal corresponding to a key manipulation detected from the user input device 435 or a signal corresponding to motion of the remote controller 200, as sensed by the sensor device 440, to the image display apparatus 100 through the wireless communicator 425.

The user input interface 150 of the image display apparatus 100 may comprise a wireless communication module 411 which wirelessly transmits signals to and/or wirelessly receives signals from the remote controller 200, and a coordinate calculator 415 which calculates coordinates representing the position of the remote controller 200 on the display screen, which is to be moved in accordance with the movement of the remote controller 200.

The user input interface 150 may wirelessly transmit RF signals to and/or wirelessly receive RF signals from the remote controller 200 through an RF module 412. In addition, the user input interface 150 may wirelessly receive IR signals from the remote controller 200 through an IR module 413 according to the IR communication standard.

The coordinate calculator 415 may receive motion information regarding the movement of the remote controller 200 through the wireless communication module 411 and may calculate coordinates (x, y) representing the position of the pointer 205 on a screen of the display 180 by correcting the motion information for possible errors or user hand tremor.

A signal received in the image display apparatus 100 from the remote controller 200 through the user input interface 150 may be transmitted to the signal processing device 170. Then, the signal processing device 170 may acquire information regarding the movement of the remote controller 200 and information regarding a key manipulation detected from the remote controller 200 from the signal received from the remote controller 200, and may control the image display apparatus 100 based on the acquired information.

In another example, the remote controller 200 may calculate the coordinates of a position to which the pointer is to be shifted in correspondence with its movement and output the coordinates to the user input interface 150 of the image display apparatus 100. In this case, the user input interface 150 may transmit information about the pointer coordinates which was not corrected for possible errors or user hand tremor to the signal processing device 170.

In a further example, unlike the configuration of the remote controller 200 illustrated in FIG. 17B, the coordinate calculator 415 may reside in the signal processing device 170, instead of the user input interface 150.

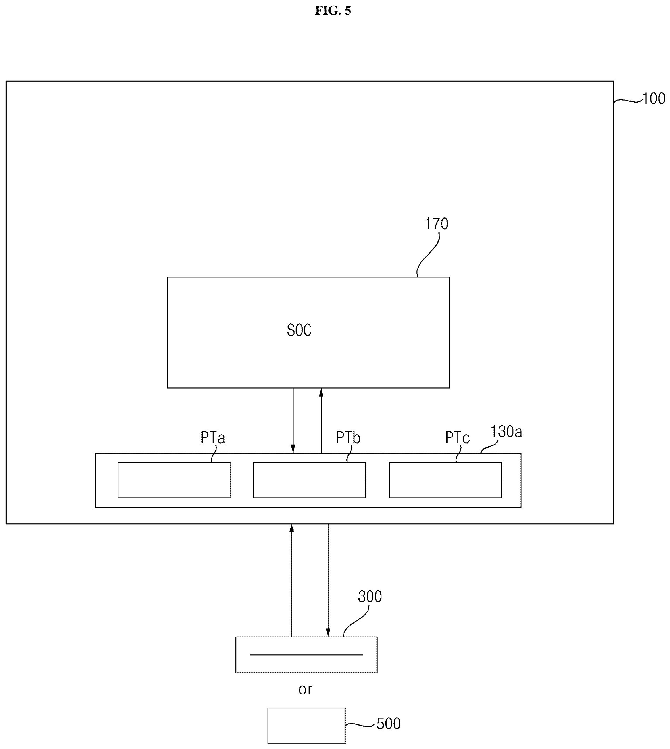

FIG. 5 is an exemplary internal block diagram of an image display apparatus according to an embodiment of the present disclosure.

Referring to the drawing, an image display apparatus 100 according to an embodiment of the present disclosure may include a display 180, an interface 130a having at least one port PTa to PTc and configured to receive a video signal from an external electronic device 300 or 500 connected to the port, and a signal processing device 170 configured to display an image corresponding to the video signal received from the interface 130a, to be displayed on the display 180.

Meanwhile, the interface 130a may be provided in the external device interface 130.

For example, the interface 130a may be a High-Definition Multimedia Interface (HDMI). Accordingly, the image display apparatus 100 may perform HDMI communication with the external electronic device 300 or 500 as a fixed line interface method.

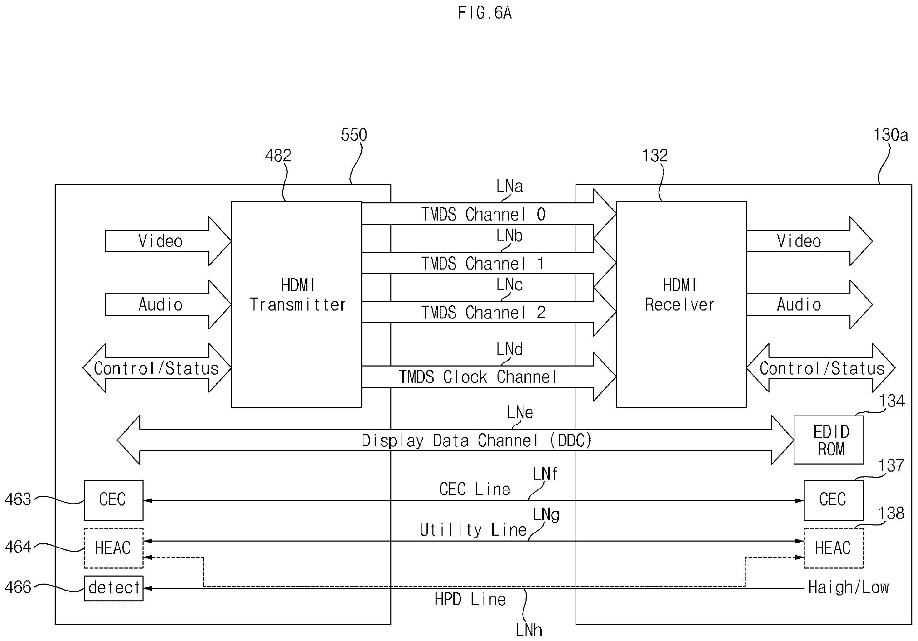

Meanwhile, the interface 130a may be an HDMI 2.0 standard interface or an HDMI 2.1 standard interface, which will be described below with reference to FIGS. 6A to 6C.

FIGS. 6A to 7B are diagrams referred to in the description of FIG. 5.

First, FIG. 6A is a diagram explaining an HDMI 2.0 standard interface.

Referring to the drawing, an interface 550 in an external electronic device may include an HDMI transmitter 482 for transmitting a video signal.

Meanwhile, the interface 550 in the external electronic device may further include a CEC terminal 463, a HEAC terminal 464, and an HPD terminal 466.

Meanwhile, the interface 130a in the image display apparatus 100 may further include an HDMI receiver 132 for receiving a video signal.

Meanwhile, the interface 130a in the image display apparatus 100 may further include an EDID EOM 134, a CEC terminal 137, and an HEAC terminal 138.

A plurality of lanes Lna to LNd, a display data channel line Lne, a CEC line LNf, a utility line LNg, and an HPD line LNh may be disposed between the HDMI transmitter 482 and the HDMI receiver 132.

Meanwhile, the plurality of lanes may be Transition Minimized Differential Signaling (TMDS) lanes.

For example, a video signal and the like may be transmitted on three of the plurality of lanes Lna to LNd, and a clock signal may be transmitted on one of the plurality of lanes Lna to LNd.

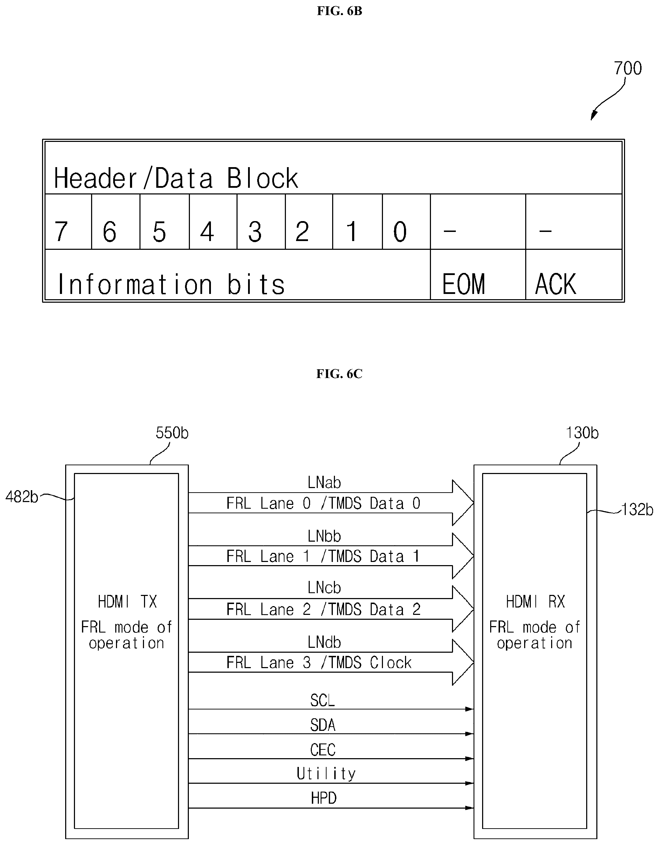

FIG. 6B is a diagram illustrating a CEC data format of the CEC line of FIG. 6A.

Referring to the drawing, a CEC data format 700 may include a plurality of information bits, EOM, and ACK.

Next, FIG. 6C is a diagram explaining an HDMI 2.1 standard interface.

Referring to the drawing, an interface 550b in an external electronic device may include an HDMI transmitter 482b for transmitting a video signal.

Meanwhile, the interface 130b in the image display apparatus 100 may include an HDMI receiver 132b for receiving a video signal.

A plurality of lanes Lnab to LNdb, an SCL line, an SDA line, a CEC line, a utility line, an HPD line, and the like may be disposed between the HDMI transmitter 482b and the HDMI receiver 132b.

Meanwhile, the plurality of lanes may be Fixed Rate Link (FRL) lanes.

For example, a video signal or a data signal, and the like may be transmitted via the plurality of lanes Lnab to LNdb.

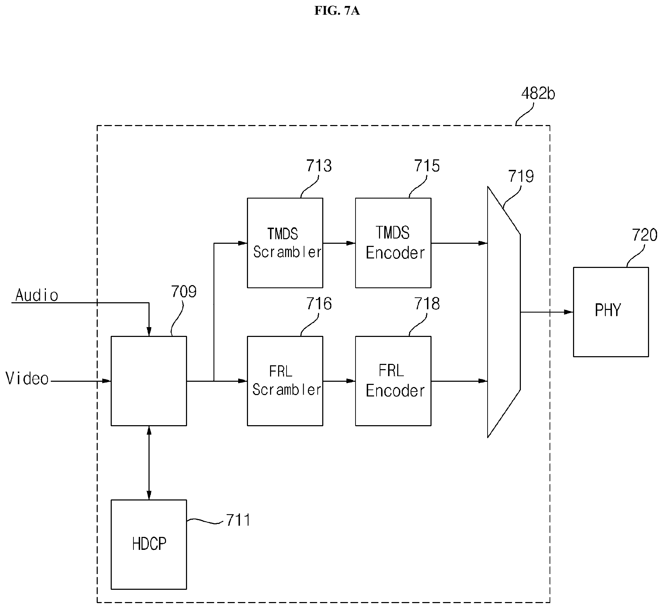

FIG. 7A is an exemplary internal block diagram of the HDMI transmitter of FIG. 6C.

Referring to the drawing, the HDMI transmitter 482b of FIG. 6C may include a first scrambler 716 configured to scramble a video signal or an audio signal in an FRL mode which is a first transmission mode, a first encoder 718 configured to encode a signal from the first scrambler 716, a second scrambler 713 configured to scramble a signal, encrypted by an encryptor 709, in a TMDS mode which is a second transmission mode, a second encoder 715 configured to encode a signal from the second scrambler 713, and a signal selector 719 configured to select and output either a signal from the first encoder 718 or a signal from the second encoder 715.

Meanwhile, the signal from the signal selector 719 may be output to the outside through a physical layer 720 and a port.

Meanwhile, the HDMI transmitter 482b may further include a encryption authenticator 711 configured to provide an encryption secure key, and an encryptor 709 configured to encrypt a video signal or an audio signal using the secure key.

That is, the first scrambler 716 may scramble the signal, encrypted by the encryptor 709, in the FRL mode which is the first transmission mode.

Further, the second scrambler 713 may scramble the signal, encrypted by the encryptor 709, in the TDMS mode which is the second transmission mode.

Accordingly, the video signal or the audio signal may be transmitted in the FRL mode which is the first transmission mode or in the TDMS mode which is the second transmission mode.

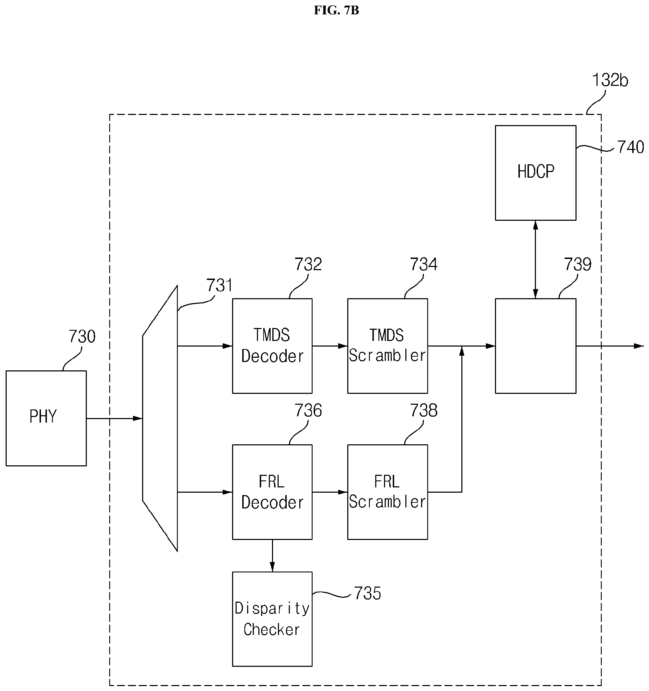

FIG. 7B is an exemplary internal block diagram of the HDMI receiver 132b of FIG. 6C.

Referring to the drawing, the HDMI receiver 132b of FIG. 6C may receive a signal from an external source through a port and a physical layer 730.

The HDMI receiver 132b of FIG. 6C may include a signal selector 731 configured to select and output either an input signal based on the first transmission mode or an input signal based on the second transmission mode, a first decoder 736 configured to decode a video signal or an audio signal in the input signal in the FRL mode which is the first transmission mode, a third scrambler 738 configured to scramble a signal from the first decoder 736, a second decoder 732 configured to decode a video signal or an audio signal in the input signal in the TMDS mode which is the second transmission mode, and a fourth scrambler 734 configured to scramble a signal from the second decoder 732.

Meanwhile, the HDMI receiver 132b may further include a encryption authenticator 740 configured to provide a encryption secure key, and a decryptor 739 configured to decrypt the encrypted signal from the third scrambler 738 or the fourth scrambler 734 by using a encryption secure key.

Meanwhile, the HDMI receiver 132b of FIG. 6C may further include a disparity checker 735 configured to check disparity based on the signal from the first decoder 736.

Accordingly, the video signal or the audio signal may be received based on the FRL mode which is the first transmission mode or the TMDS mode which is the second transmission mode.

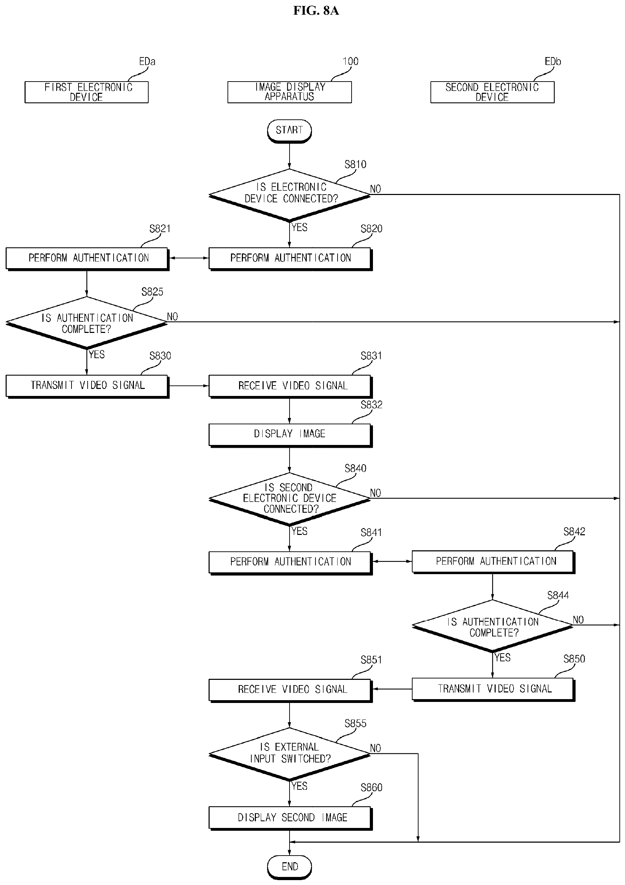

FIG. 8A is a flowchart illustrating an operating method of an image display apparatus according to an embodiment of the present disclosure.

Referring to the drawing, the interface 130a of the image display apparatus 100 of the present disclosure determines whether an electronic device EDa is connected (S810), and if the first electronic device EDa is connected, the interface 130a may perform authentication with the connected electronic device EDa (S820).

In response thereto, the first electronic device EDa may perform authentication with the image display apparatus 100 (S821).

Then, upon completing authentication with the image display apparatus 100 (S825), an interface of the first electronic device EDa transmits a video signal (S830).

In this case, the interface of the first electronic device EDa may transmit the video signal in the FRL mode which is the first transmission mode or the TMDS mode which is the second transmission mode.

In response thereto, the interface 130a of the image display apparatus 100 receives the video signal (S831).

For example, the interface 130a of the image display apparatus 100 may receive the video signal in the FRL mode which is the first transmission mode or the TMDS mode which is the second transmission mode.

Then, the signal processing device 170 of the image display apparatus 100 may control an image corresponding to the video signal received from the interface 130a, to be displayed on the display 180 (S832).

Meanwhile, if a second electronic device EDb is connected (S840), the signal processing device 170 of the image display apparatus 100 may perform authentication with the second electronic device EDb (S841), separately from the first electronic device EDa.

In response thereto, the second electronic device EDb may perform authentication with the image display apparatus 100 (S842).

Then, upon completing authentication with the image display apparatus 100 (S844), an interface of the second electronic device EDb transmits a second video signal (S850).

In this case, the interface of the second electronic device EDb may transmit the video signal in the FRL mode which is the first transmission mode or the TMDS mode which is the second transmission mode.

In response thereto, the interface 130a of the image display apparatus 100 receives the second video signal (S851).

For example, the interface 130a of the image display apparatus 100 may receive the second video signal in the FRL mode which is the first transmission mode or the TMDS mode which is the second transmission mode.

Then, in response to an input for external input switching (S855), the signal processing device 170 of the image display apparatus 100 may control a second image corresponding to the second video signal received from the interface 130a, to be displayed on the display 180 (S860).

Meanwhile, as illustrated in FIG. 8A, if the image display apparatus 100 and the first electronic device EDa are connected, the image display apparatus 100 is required to perform authentication with the first electronic device EDa.

Particularly, if the second electronic device EDb is further connected to the image display apparatus 100, the image display apparatus 100 is required to perform authentication with the second electronic device EDb and maintain authentication with the second electronic device EDb while maintaining authentication with the first electronic device EDa. Accordingly, there is a drawback in that it requires significant power consumption to maintain authentication with a plurality of electronic devices.

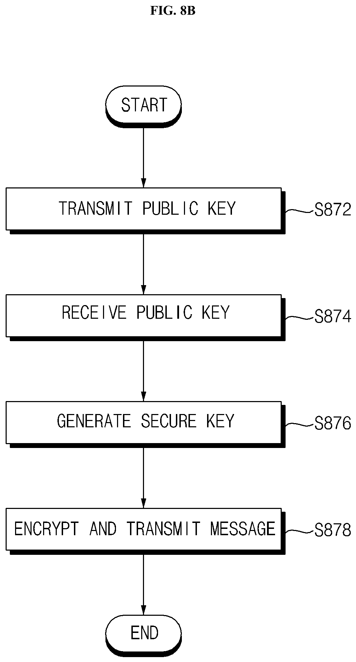

FIG. 8B is a flowchart illustrating an example of the authentication method of FIG. 8A.

Referring to the drawing, if an external electronic device EDa or EDb is connected, the interface 130a of the image display apparatus 100 may transmit a public key to the external electronic device EDa or EDb (S872).

In response thereto, the external electronic device EDa or EDb receives the public key and transmits a second public key, which is their own public key, to the interface 130a of the image display apparatus 100.

Then, the interface 130a of the image display apparatus 100 may receive the second public key from the external electronic device EDa or EDb (S874).

Then, the interface 130a of the image display apparatus 100 may generate a secure key based on the public key, the second public key, or a private key of the image display apparatus (S876).

In addition, the interface 130a of the image display apparatus 100 may encrypt a message for authentication by using the generated secure key, and may transmit the encrypted message to the external electronic device EDa or EDb.

In response thereto, the external electronic device EDa or EDb may receive the encrypted message and may complete authentication by using their own secure key.

Then, upon completing authentication, the external electronic device EDa or EDb may transmit a video signal.

Meanwhile, if the first electronic device EDa or the second electronic device EDb is connected to the image display apparatus 100, operation 872 (S872) or operation 878 (S878) of FIG. 8B may be performed, respectively.

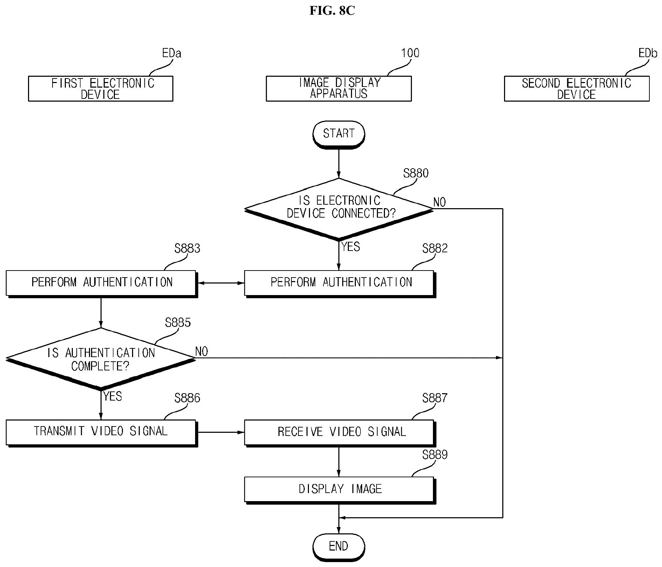

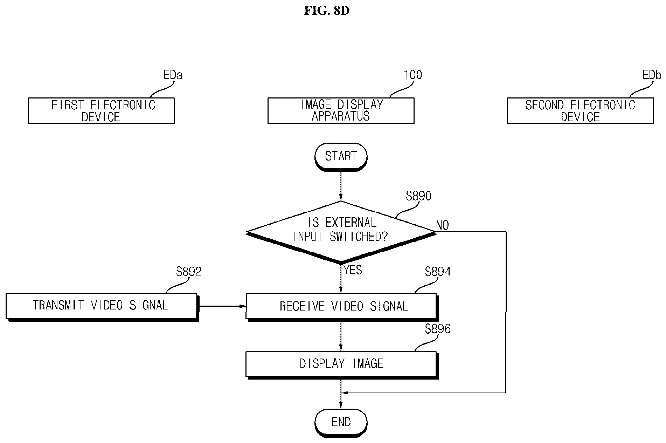

FIGS. 8C and 8D are flowcharts illustrating an operating method of an image display apparatus associated with the present disclosure.

First, FIG. 8C is a diagram illustrating an example of an operating method of an image display apparatus associated with the present disclosure.

Referring to the drawing, the interface 130a of the image display apparatus 100 determines whether the first electronic device EDa is connected (S880), and if the first electronic device EDa is connected, the interface 130a of the image display apparatus 100 may perform authentication with the first electronic device EDa (S882) while maintaining authentication with the second electronic device EDb which is already connected.

In response thereto, the first electronic device EDa may perform authentication with the image display apparatus 100 (S883).

Then, upon completing authentication with the image display apparatus 100 (S885), an interface of the first electronic device EDa transmits a video signal (S886).

In this case, the interface of the first electronic device EDa may transmit the video signal in the FRL mode which is the first transmission mode or the TMDS mode which is the second transmission mode.

In response thereto, the interface 130a of the image display apparatus 100 receives the video signal (S887).

For example, the interface 130a of the image display apparatus 100 may receive the video signal in the FRL mode which is the first transmission mode or the TMDS mode which is the second transmission mode.

Then, the signal processing device 170 of the image display apparatus 100 may control an image corresponding to the video signal received from the interface 130a, to be displayed on the display 180 (S889).

Meanwhile, if the second electronic device EDb is connected while the first electronic device EDa is connected and authentication with the first electronic device EDa is maintained, operation 872 (S872) to operation 878 (S878) of FIG. 8B may be performed for authentication.

Meanwhile, there is a drawback in that as the number of electronic devices that are connected at the same time increases, an authentication process is repeated, and significant power consumption is required in maintaining authentication after the authentication process is performed.

Next, FIG. 8D is a diagram illustrating another example of an operating method of an image display apparatus associated with the present disclosure.

Referring to the drawing, the interface 130a of the image display apparatus 100 determines whether external input is switched (S890) while the first electronic device Eda is connected and remains authenticated, and in response to an input for external input switching to the first electronic device EDa, the interface 130a of the image display apparatus 100 may receive a video signal immediately without a separate authentication procedure for the first electronic device EDa (S894).

That is, based on the external input switching, the first electronic device EDa transmits a video signal to the image display apparatus 100 (S892), and in response thereto, the interface 130a of the image display apparatus 100 may receive the video signal.

In this case, the interface 130a of the image display apparatus 100 may receive the video signal in the FRL mode which is the first transmission mode or the TMDS mode which is the second transmission mode.

Then, the signal processing device 170 of the image display apparatus 100 may control an image corresponding to the video signal received from the interface 130a, to be displayed on the display 180 (S896).

Meanwhile, when receiving a video signal from the second electronic device EDb which is already connected, the interface 130a of the image display apparatus 100 may maintain encryption authentication while separately receiving a video signal from the first electronic device EDa, so as not to perform a separate authentication procedure during the external input switching.

That is, when receiving a video signal from the second electronic device EDb which is already connected, the interface 130a of the image display apparatus 100 may separately receive a video signal from the first electronic device EDa in the FRL mode which is the first transmission mode or the second transmission mode, may decode the video signal, and may maintain encryption authentication based on the decoded video signal.

Accordingly, in response to an input for external input switching, the interface 130a of the image display apparatus 100 may rapidly perform external input switching without separately performing encryption authentication as illustrated in FIG. 8B.

However, when receiving the video signal from the second electronic device EDb which is already connected, the interface 130a of the image display apparatus 100 may separately receive a video signal from the first electronic device EDa, and in order to decode the video signal, the interface 130a of the image display apparatus 100 is required to receive signals from the plurality of lanes LNa to LNd of FIG. 6B or the plurality of lanes LNab to LNdb of FIG. 6C, such that power should be supplied to all the plurality of lanes LNa to LNd of FIG. 6B or all the plurality of lanes LNab to LNdb of FIG. 6C.

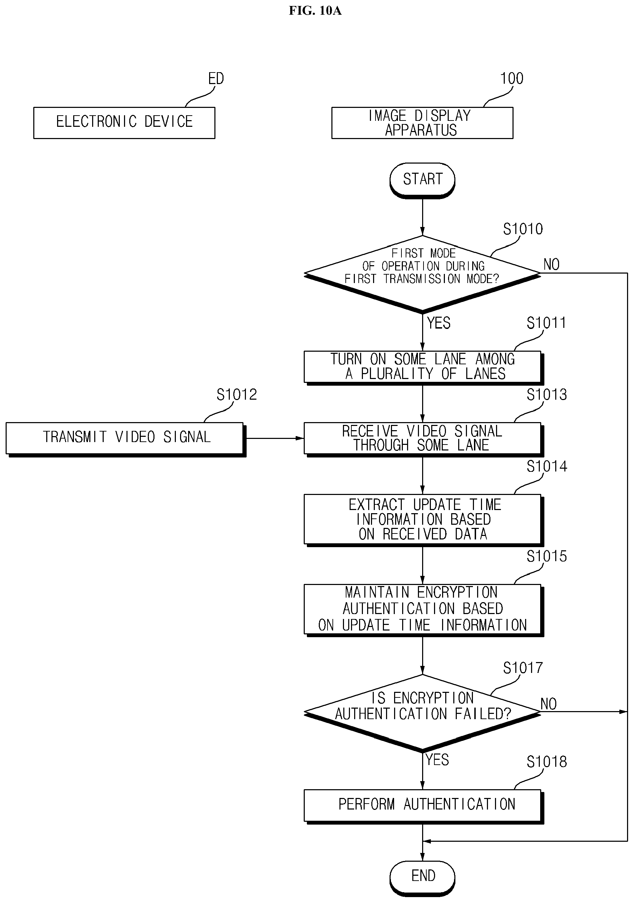

Accordingly, there is a drawback in that the first electronic device EDa, which is in a standby mode, consumes significant power. Accordingly, the present disclosure proposes a method of rapidly performing external input switching in response to an input for external input switching, while reducing power consumption in maintaining authentication, which will be described below with reference to FIG. 10A and subsequent figures.

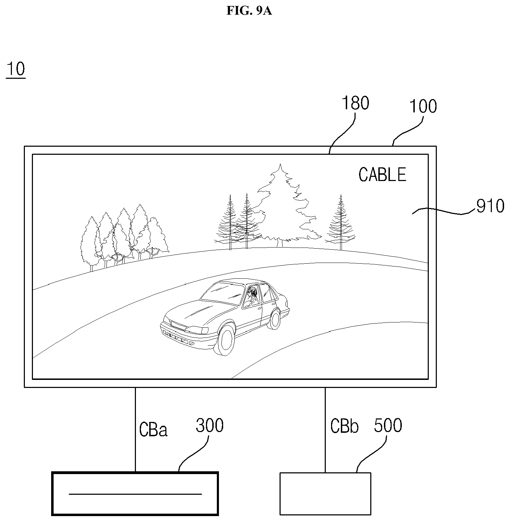

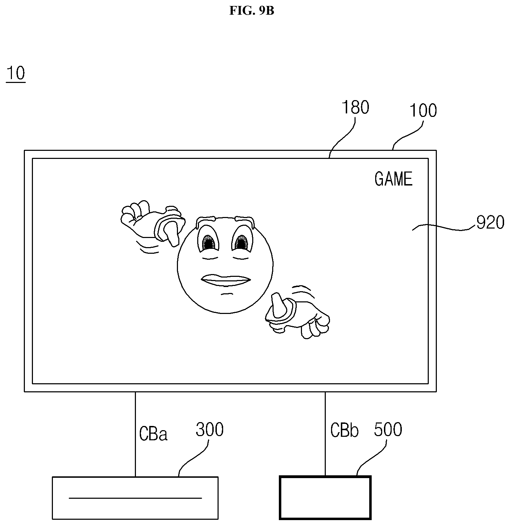

FIGS. 9A and 9B are diagrams illustrating various external input images displayed on an image display apparatus according to an embodiment of the present disclosure.

First, FIG. 9A is a diagram illustrating a first image 910 displayed on the image display apparatus 100 according to an embodiment of the present disclosure.

Referring to the drawing, while a first electronic device 300 is connected by wire to the image display apparatus 100 according to an embodiment of the present disclosure through a first cable CBa, and a second electronic device 500 is connected by wire to the image display apparatus 100 through a second cable CBb, if an external input corresponding to the first electronic device 300 is activated, the interface 130a of the image display apparatus 100 may receive a first video signal from the first electronic device 300 based on the FRL mode which is the first transmission mode or the TMDS mode which is the second transmission mode.

Then, the signal processing device 170 of the image display apparatus 100 may control the first image 910, corresponding to the first video signal received from the interface 130a, to be displayed on the display 180.

In this case, the interface 130a of the image display apparatus 100 may turn on some lane among a plurality of lanes with the second electronic device 500, and may maintain encryption authentication based on data received through some lane.

Accordingly, power consumption required for encryption authentication of the connected second electronic device 500 may be reduced. Further, during external input switching to the second electronic device 500, external input switching may be rapidly performed.

Next, FIG. 9B is a diagram illustrating a second image 920 displayed on the image display apparatus 100 according to an embodiment of the present disclosure.

Referring to the drawing, while the first electronic device 300 is connected by wire to the image display apparatus 100 according to an embodiment of the present disclosure through the first cable CBa, and the second electronic device 500 is connected by wire to the image display apparatus 100 through the second cable CBb, if an external input corresponding to the second electronic device 500 is activated, the interface 130a of the image display apparatus 100 may receive a second video signal from the second electronic device 500 based on the FRL mode which is the first transmission mode or the TMDS mode which is the second transmission mode.

Then, the signal processing device 170 of the image display apparatus 100 may control the second image 910, corresponding to the second video signal received from the interface 130a, to be displayed on the display 180.

In this case, the interface 130a of the image display apparatus 100 may turn on some lane among the plurality of lanes with the first electronic device 300, and may maintain encryption authentication based on data received through some lane.

Accordingly, power consumption required for encryption authentication of the connected second electronic device 310 may be reduced. Further, during external input switching to the first electronic device 300, external input switching may be rapidly performed.

FIG. 10A is a flowchart illustrating an operating method of an image display apparatus according to an embodiment of the present disclosure.

Referring to the drawing, the interface 130a of the image display apparatus 100 according to an embodiment of the present disclosure determines whether the interface 130a operates in a first mode of operation during the first transmission mode (S1010), and if so, the interface 130a of the image display apparatus 100 turns on some lane LNab among the plurality of lanes LNab to LNdb and turns off the other lanes LNbb to LNdb (S1011).

The first transmission mode may be a fixed rate link (FRL) mode which is an HDMI 2.1 transmission mode.

Meanwhile, the first mode of operation is a low power mode, in which only some lane LNab may be turned on among the plurality of lanes LNab to LNdb of FIG. 6C, and the other lanes LNbb to LNdb may be turned off. Accordingly, power consumption may be reduced.

For example, in the first mode of operation, DC power supplied by the power supply 190 may be supplied to at least one port PTa to PTc in the interface 130a and to some lane LNab among the plurality of lanes LNab to LNdb, and may not be supplied to the other lanes LNbb to LNdb.

Meanwhile, a connected electronic device ED transmits a video signal or a data signal based on the first transmission mode (S1012), and in response thereto, the interface 130a of the image display apparatus 100 receives the video signal or the data signal through some lane LNab among the plurality of lanes LNab to LNdb (S1013).

Then, in the first mode of the first transmission mode, the interface 130a of the image display apparatus 100 generates update time information of an image frame based on data received through some lane LNab among the plurality of lanes LNab to LNdb (S1014).

For example, in the first mode of the first transmission mode, the interface 130a of the image display apparatus 100 may generate update time information of an image frame based on header data among the data received through some lane LNab among the plurality of lanes LNab to LNdb.

Specifically, in the first mode of the first transmission mode, the interface 130a of the image display apparatus 100 may generate update time information of an image frame based on map character information in the data received through some lane LNab among the plurality of lanes LNab to LNdb.

Particularly, in the first mode of the first transmission mode, the interface 130a of the image display apparatus 100 may generate update time information of an image frame based on map character information in the header data received through the first lane LNab which is the first lane among the plurality of lanes LNab to LNdb.

Then, in the first mode of the first transmission mode, the interface 130a of the image display apparatus 100 may maintain encryption authentication based on the update time information of the image frame (S1015).

Particularly, while displaying an image received from a second electronic device (not shown), the image display apparatus 100 preferably operates as illustrated in FIG. 10A in order to maintain simplified authentication with the electronic device ED.

Accordingly, when operating in the first mode of the first transmission mode, the image display apparatus 100 may reduce power consumption while maintaining encryption authentication. Further, the image display apparatus 100 may rapidly perform external input switching.

Meanwhile, in the first mode of the first transmission mode, the interface 130a of the image display apparatus 100 may maintain simplified encryption authentication, and then, if encryption authentication is failed (S1017), may perform encryption authentication again (S1018).

For example, in order to perform encryption authentication again when encryption authentication is failed or at the time of initial authentication, the interface 130a of the image display apparatus 100 may transmit a first public key to an external electronic device, may receive a second public key from the external electronic device, may generate a secure key based on the second public key, may encrypt a message based on the secure key, and may transmit the encrypted message to the external electronic device, as illustrated in FIG. 8B. Accordingly, signals may be stably received.

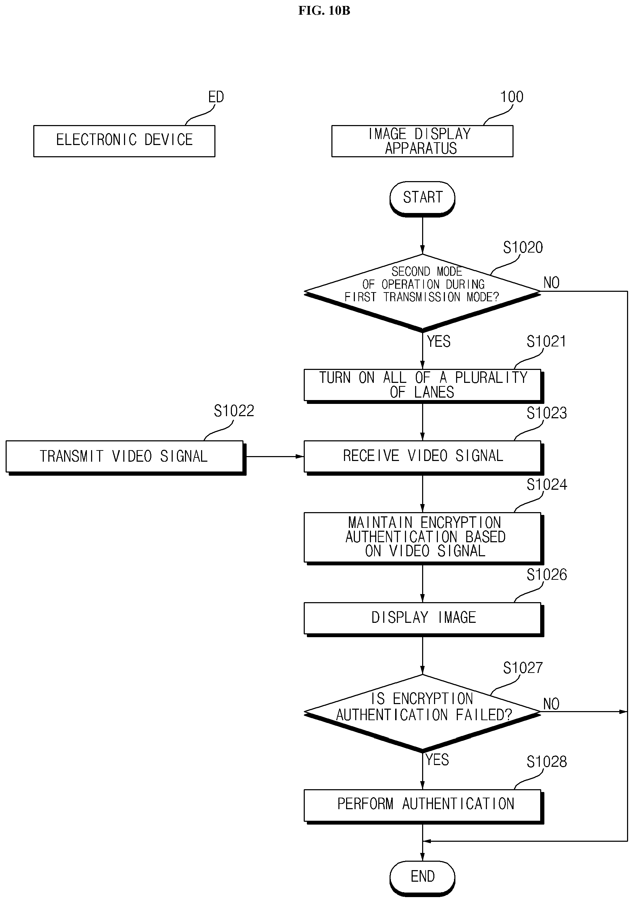

FIGS. 10B to 10E are flowcharts illustrating an operating method of an image display apparatus according to various embodiments of the present disclosure.

First, FIG. 10B is a diagram illustrating an example of operation in a second mode of operation during a first transmission mode.

Referring to the drawing, the interface 130a of the image display apparatus 100 according to an embodiment of the present disclosure determines whether the interface 130a operates in a second mode of operation during the first transmission mode (S1020), and if so, the interface 130a of the image display apparatus 100 turns on all the plurality of lanes LNab to LNdb (S1021).

Meanwhile, the second mode of operation is a normal mode or a display mode, in which all the plurality of lanes LNab to LNdb of FIG. 6C may be turned on.

Meanwhile, the second mode of operation may be performed in the case in which an image corresponding to a video signal from a connected electronic device ED is displayed on the display 180 of the image display apparatus 100.

For example, in the second mode of operation, DC power supplied by the power supply 190 may be supplied to at least one port PTa to PTc in the interface 130a and to each of the plurality of lanes LNab to LNdb.

Meanwhile, the connected electronic device ED transmits a video signal or a data signal based on the first transmission mode (S1022), and in response thereto, the interface 130a of the image display apparatus 100 receives the video signal or the data signal through the plurality of lanes LNab to LNdb (S1023).

Then, in the second mode of the first transmission mode, the interface 130a of the image display apparatus 100 maintains encryption authentication based on the video signal received through the plurality of lanes LNab to LNdb (S1024).

For example, in the second mode of the first transmission mode, the interface 130a of the image display apparatus 100 may generate frame data based on the video signal received through the plurality of lanes LNab to LNdb, and may maintain encryption authentication based on the generated frame data.

Then, while the interface 130a operates in the second mode of the first transmission mode, the signal processing device 170 in the image display apparatus 100 may control an image corresponding to the video signal received from the plurality of lanes LNab to LNdb, to be displayed on the display 180 (S1026).

Accordingly, the image corresponding to the video signal received from the connected electronic device ED may be stably displayed on the display 180.

Meanwhile, in comparison of FIG. 10A with FIG. 10B, the image display apparatus 100 may operate with less power in the first mode of the first transmission mode than in the second mode of the first transmission mode.

Meanwhile, in the second mode of the first transmission mode, the interface 130a of the image display apparatus 100 may maintain simplified encryption authentication, and then, if encryption authentication is failed (S1027), may perform encryption authentication again (S1028).

For example, in order to perform encryption authentication again when encryption authentication is failed or at the time of initial authentication, the interface 130a of the image display apparatus 100 may transmit a first public key to an external electronic device, may receive a second public key from the external electronic device, may generate a secure key based on the second public key, may encrypt a message based on the secure key, and may transmit the encrypted message to the external electronic device, as illustrated in FIG. 8B. Accordingly, signals may be stably received.

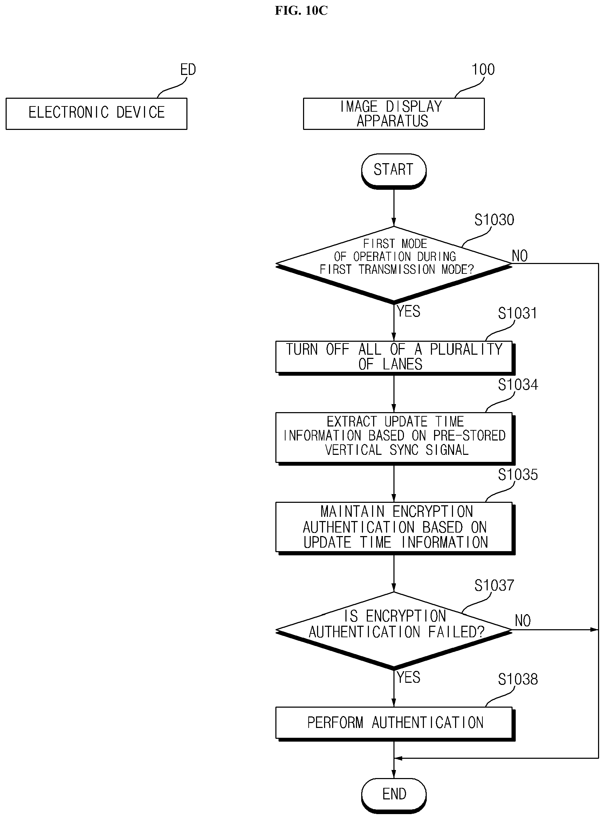

FIG. 10C is a diagram illustrating an example of operation in the first mode of the second transmission mode.

Referring to the drawing, while operating in the second mode of the second transmission mode, the interface 130a of the image display apparatus 100 according to an embodiment of the present disclosure may maintain encryption authentication based on a video signal and a clock signal received through the plurality of lanes LNab to LNdb.

First, the interface 130a of the image display apparatus 100 determines whether the interface 130a operates in the first mode of the second transmission mode (S1030), and if so, the interface 130a of the image display apparatus 100 turns off all the plurality of lanes LNab to LNdb (S1031).

The second transmission mode may be a Transition Minimized Differential Signaling (TMDS) mode which is the HDMI 2.0 transmission mode.

Meanwhile, the first mode of operation during the second transmission mode is a low power mode, in which all the plurality of lanes LNab to LNdb of FIG. 6C may be turned off. Accordingly, power consumption may be reduced.

For example, in the first mode of the second transmission mode, DC power supplied by the power supply 190 may be supplied to at least one port PTa to PTc in the interface 130a, and may not be supplied to each of the plurality of lanes LNab to LNdb in the port.

Meanwhile, the second mode of operation during the second transmission mode is a normal mode or a display mode, in which all the plurality of lanes LNab to LNdb of FIG. 6C may be turned on.

Meanwhile, during the second transmission mode, a video signal and the like may be received through first to third lanes LNab to LNcb among the plurality of lanes LNab to LNdb of FIG. 6C, and a clock signal may be received through a fourth lane LNdb.

Accordingly, while operating in the second mode of the second transmission mode, the interface 130a of the image display apparatus 100 may detect a frame rate or a vertical sync signal based on the received clock signal, and may store the detected signal.

Meanwhile, while operating in the first mode of the second transmission mode, the interface 130a of the image display apparatus 100 may generate update time information of an image frame based on previously stored vertical sync signal information or frame rate information (S1034) even when all the plurality of lanes LNab to LNdb are turned off.

Then, while operating in the first mode of the second transmission mode, the interface 130a of the image display apparatus 100 may maintain encryption authentication based on the update time information of the image frame (S1035).

Particularly, while displaying an image received from the second electronic device (not shown), the image display apparatus 100 preferably operates as illustrated in FIG. 10C in order to maintain simplified authentication with the electronic device ED.

Accordingly, when operating in the first mode of the second transmission mode, the image display apparatus 100 may reduce power consumption while maintaining encryption authentication. Further, the image display apparatus 100 may rapidly perform external input switching.

Meanwhile, while operating in the first mode of the second transmission mode, the interface 130a of the image display apparatus 100 may maintain simplified encryption authentication, and then, if encryption authentication is failed (S1037), may perform encryption authentication again (S1038).

For example, in order to perform encryption authentication again when encryption authentication is failed or at the time of initial authentication, the interface 130a of the image display apparatus 100 may transmit a first public key to an external electronic device, may receive a second public key from the external electronic device, may generate a secure key based on the second public key, may encrypt a message based on the secure key, and may transmit the encrypted message to the external electronic device, as illustrated in FIG. 8B. Accordingly, signals may be stably received.

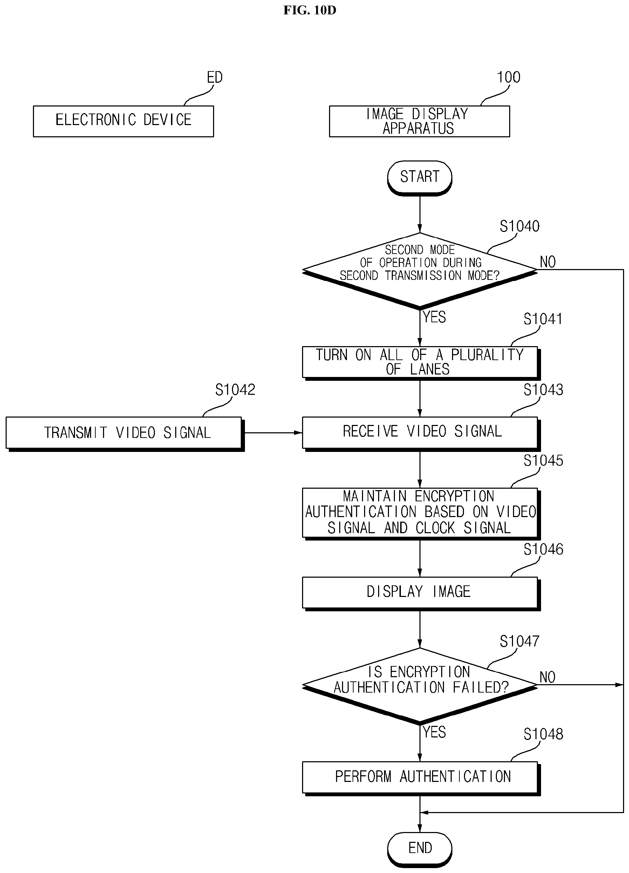

FIG. 10D is a diagram illustrating an example of operation in the second mode of the second transmission mode.

Referring to the drawing, the interface 130a of the image display apparatus 100 according to an embodiment of the present disclosure determines whether the interface 130a operates in the second mode of the second transmission mode (S1040), and if so, the interface 130a of the image display apparatus 100 turns on all the plurality of lanes LNab to LNdb (S1041).

Meanwhile, the second mode of operation may be performed in the case in which an image corresponding to the video signal from the connected electronic device ED is displayed on the display 180 of the image display apparatus 100.

For example, in the second mode of operation, DC power supplied by the power supply 190 may be supplied to at least one port PTa to PTc in the interface 130a and to the plurality of lanes LNab to LNdb in the port.

Meanwhile, the connected electronic device ED transmits a video signal or a clock signal based on the second transmission mode (S1042), and in response thereto, the interface 130a of the image display apparatus 100 receives the video signal or the clock signal through the plurality of lanes LNab to LNdb (S1043).

Then, while operating in the second mode of the second transmission mode, the interface 130a of the image display apparatus 100 maintains encryption authentication based on the video signal received through the first to third lanes LNab to LNcb and the clock signal received through the fourth lane LNdb (S1045).

For example, while operating in the second mode of the second transmission mode, the interface 130a of the image display apparatus 100 may generate frame data based on the video signal, received through the first to third lanes LNab to LNcb among the plurality of lanes LNab to LNdb and the received clock signal, and may maintain encryption authentication based on the generated frame data.

Then, while the interface 130a operates in the second mode of the second transmission mode, the signal processing device 170 in the image display apparatus 100 may control an image corresponding to the video signal received from the plurality of lanes LNab to LNdb, to be displayed on the display 180 (S1046).

Accordingly, the image corresponding to the video signal received from the connected electronic device ED may be stably displayed on the display 180.

Meanwhile, in comparison of FIG. 10C with FIG. 10D, the image display apparatus 100 may operate with less power in the first mode of the second transmission mode than in the second mode of the second transmission mode.

Meanwhile, while operating in the second mode of the second transmission mode, the interface 130a of the image display apparatus 100 may maintain simplified encryption authentication, and then, if encryption authentication is failed (S1047), may perform encryption authentication again (S1048).

For example, in order to perform encryption authentication again when encryption authentication is failed or at the time of initial authentication, the interface 130a of the image display apparatus 100 may transmit a first public key to an external electronic device, may receive a second public key from the external electronic device, may generate a secure key based on the second public key, may encrypt a message based on the secure key, and may transmit the encrypted message to the external electronic device, as illustrated in FIG. 8B. Accordingly, signals may be stably received.

Meanwhile, in comparison of FIGS. 10A, 10B, 10C, and 10D, the interface 130a of the image display apparatus 100 may receive higher resolution image data in the first transmission mode than in the second transmission mode. Accordingly, high-resolution image data may be received.

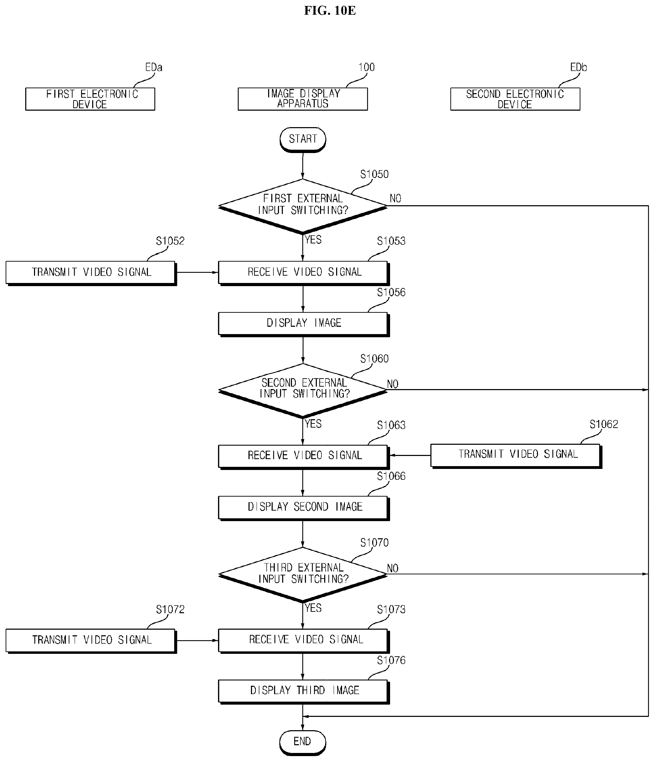

FIG. 10E is a diagram illustrating an example of performing external input switching between a plurality of electronic devices.

Referring to the drawing, while displaying an image corresponding to a video signal received from a second electronic device EDb, the image display apparatus 100 according to an embodiment of the present disclosure may receive an input for external input switching from the remote controller 200 and the like.

Meanwhile, in response to an input for first external input switching (S1050), the interface 130a of the image display apparatus 100 according to an embodiment of the present disclosure may receive a first video signal from a first electronic device EDa in which encryption authentication is maintained (S1053).

That is, the first electronic device EDa, in which encryption authentication is maintained, may transmit the first video signal based on the first transmission mode or the second transmission mode (S 1052).

In response thereto, upon receiving the input for first external input switching, the interface 130a of the image display apparatus 100 may receive the first video signal from the first electronic device EDa in which encryption authentication is maintained.

The interface 130a in the image display apparatus 100 may perform encryption authentication based on the received first video signal.

Then, the signal processing device 170 in the image display apparatus 100 may control a first image corresponding to the first video signal or first frame data received from the interface 130a, to be displayed on the display 180 (S1056).

Accordingly, in response to the input for first external input switching, the image display apparatus 100 may rapidly display an external input image.

Meanwhile, while displaying the first image corresponding to the first video signal from the first electronic device EDa, the interface 130a in the image display apparatus 100 may turn on only some lane LNab among the plurality of lanes LNab to LNdb of the second electronic device EDb as illustrated in FIG. 10A, or may turn off all the plurality of lanes LNab to LNdb of the second electronic device EDb as illustrated in FIG. 10C.

In addition, while displaying the first image corresponding to the first video signal from the first electronic device EDa, the interface 130a in the image display apparatus 100 may maintain encryption authentication of the second electronic device EDb. Accordingly, power consumption may be reduced while maintaining encryption authentication.

Then, while displaying the first image corresponding to the first video signal from the first electronic device EDa, the interface 130a in the image display apparatus 100 may receive an input for external input switching from the remote controller 200 and the like.

Meanwhile, in response to an input for second external input switching (S1060), the interface 130a in the image display apparatus 100 according to an embodiment of the present disclosure may receive a second video signal from the second electronic device EDb in which encryption authentication is maintained (S1063).

That is, the second electronic device EDb, in which encryption authentication is maintained, may transmit the second video signal based on the first transmission mode or the second transmission mode (S1062).

In response thereto, upon receiving the input for second external input switching, the interface 130a in the image display apparatus 100 may receive the second video signal from the second electronic device EDb in which encryption authentication is maintained.

The interface 130a in the image display apparatus 100 may perform encryption authentication based on the received second video signal.

Then, the signal processing device 170 in the image display apparatus 100 may control a second image corresponding to the second video signal or second frame data received from the interface 130a, to be displayed on the display 180 (S1066).

Accordingly, in response to the input for second external input switching, the image display apparatus 100 may rapidly display an external input image.

Meanwhile, while displaying the second image corresponding to the second video signal from the second electronic device EDb, the interface 130a in the image display apparatus 100 may turn on only some lane LNab among the plurality of lanes LNab to LNdb of the first electronic device EDb as illustrated in FIG. 10A, or may turn off all the plurality of lanes LNab to LNdb of the first electronic device EDa as illustrated in FIG. 10C.

In addition, while displaying the second image corresponding to the second video signal from the second electronic device EDb, the interface 130a in the image display apparatus 100 may maintain encryption authentication of the first electronic device EDa. Accordingly, power consumption may be reduced while maintaining encryption authentication.

Then, while displaying the second image corresponding to the second video signal received from the second electronic device EDb, the interface 130a in the image display apparatus 100 may receive an input for external input switching from the remote controller 200 and the like.

Meanwhile, in response to an input for third external input switching (S1070), the interface 130a in the image display apparatus 100 according to an embodiment of the present disclosure may receive a third video signal from the first electronic device EDa in which encryption authentication is maintained (S1073).

That is, the first electronic device EDa in which encryption authentication is maintained may transmit the third video signal based on the first transmission mode or the second transmission mode (S 1072).

In response thereto, upon receiving the input for third external input switching, the interface 130a in the image display apparatus 100 may receive the third video signal from the first electronic device EDa in which encryption authentication is maintained.

The interface 130a in the image display apparatus 100 may perform encryption authentication based on the received third video signal.

Then, the signal processing device 170 in the image display apparatus 100 may control a third image corresponding to the third video signal or third frame data received from the interface 130a, to be displayed on the display 180 (S1076).

Accordingly, in response to the input for third external input switching, the image display apparatus 100 may rapidly display an external input image.

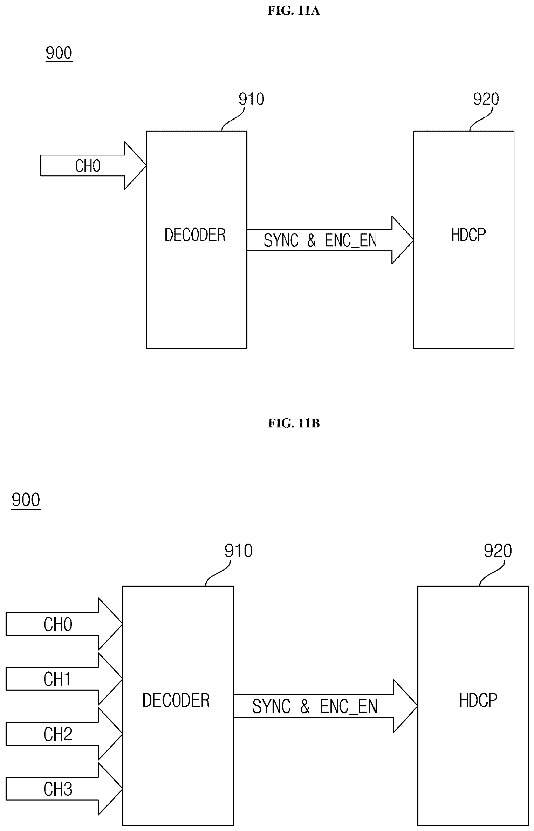

FIGS. 11A to 16 are diagrams referred to in the description of FIGS. 10A to 10E.

First, FIG. 11A is a diagram illustrating an example in which an interface 900 in the image display apparatus 100 according to an embodiment of the present disclosure operates in the first mode of the first transmission mode.

Referring to the drawing, the interface 900 in the image display apparatus 100 may include a video decoder 910 configured to decode a received video signal, and a encryption authenticator 920 configured to perform encryption authentication based on a video signal or a clock signal.

Meanwhile, in the first mode of the first transmission mode, the interface 900 in the image display apparatus 100 according to an embodiment of the present disclosure turns on only some lane CH0 among a plurality of lanes CH0 to CH3 in a port.

Accordingly, the video decoder 910 may generate update time information of an image frame based on data input through some lane CH0 among the plurality of lanes CH0 to CH3, and may output the generated information.

Meanwhile, in the drawing, the first lane CH0 is used as some lane among the plurality of lanes CH0 to CH3, but is not limited thereto, and a second lane CH1 or a third lane CH2 or a fourth lane CH3 may also be used as some lane of the plurality of lanes CH0 to CH3.

Further, in the first mode of the first transmission mode, the encryption authenticator 920 may maintain encryption authentication based on the update time information of the image frame which is generated by the video decoder 910. Accordingly, power consumption may be reduced while maintaining encryption authentication.

Next, FIG. 11B is a diagram illustrating an example in which the interface 900 of the image display apparatus 100 according to an embodiment of the present disclosure operates in the second mode of the first transmission mode.

Referring to the drawing, in the second mode of the first transmission mode, the interface 900 in the image display apparatus 100 according to an embodiment of the present disclosure turns on all the plurality of lanes CH0 to CH3 in the port.

Accordingly, the video decoder 910 may decode video signals input through the plurality of lanes CH0 to CH3.

In addition, in the second mode of the first transmission mode, the encryption authenticator 920 may maintain encryption authentication based on image frame data or the video signal decoded by the video decoder 910.

Accordingly, in the second mode of the first transmission mode, the image display apparatus 100 may stably display an image on the display 180.

Meanwhile, the interface 900 may operate with less power in the first mode of the first transmission mode than in the second mode of the first transmission mode. Accordingly, power consumption may be reduced while maintaining encryption authentication.

FIG. 12 is an exemplary internal block diagram of an interface device in an image display apparatus according to an embodiment of the present disclosure.

Referring to the drawing, an interface device 1000 in the image display apparatus 100 according to an embodiment of the present disclosure may include: a decoder 1031 configured to decode data received from some lane CH0 among the plurality of lanes CH0 to CH3 in a port, in the first mode of the first transmission mode; a descrambler 1033 configured to descramble data from the decoder 1031; an update time detector 1035 configured to generate update time information of an image frame based on data from the descrambler 1033; and a encryption authenticator 1020 configured to maintain or perform encryption authentication again based on the update time information of the image frame which is received from the update time detector 1035. Accordingly, power consumption may be reduced while maintaining encryption authentication.

Meanwhile, the interface device 1000 in the image display apparatus 100 according to an embodiment of the present disclosure may further include a sync signal generator 1037 configured to output a sync signal and an encryption enable signal based on the update time information of the image frame which is received from the update time detector 1035; and a signal selector 1039 configured to select either a signal from the sync signal generator 1037 or the deframer 1016.

Meanwhile, the encryption authenticator 1020 may maintain or perform encryption authentication again based on the sync signal or the encryption enable signal from the sync signal generator 1037.

Meanwhile, in the first mode of the first transmission mode, the decoder 1031 may decode data received from some lane among the plurality of lanes CH0 to CH3 in the port.

For example, in the first mode of the first transmission mode, the decoder 1031 may decode data received from the first lane CH0 which is the first lane among the plurality of lanes CH0 to CH3.

Meanwhile, unlike the drawing, in the first mode of the first transmission mode, the decoder 1031 may decode data received from the second lane CH1 which is the second lane among the plurality of lanes CH0 to CH3, or may decode data received from the third lane CH2 which is the third lane among the plurality of lanes CH0 to CH3, or may decode data received from the fourth lane CH3 which is the fourth lane among the plurality of lanes CH0 to CH3.

Then, the descrambler 1033 may descramble the data decoded by the decoder 1031.

Next, in the first mode of the first transmission mode, the update time detector 1035 may generate update time information of an image frame based on header data received through some lane among the plurality of lanes CH0 to CH3.

For example, in the first mode of the first transmission mode, the update time detector 1035 may generate update time information of the image frame based on header data received through the first lane CH0 which is the first lane among the plurality of lanes CH0 to CH3.

Particularly, in the first mode of the first transmission mode, the update time detector 1035 may generate update time information of the image frame based on map character information in the header data, among the data received through the first lane CH0 which is the first lane among the plurality of lanes CH0 to CH3.

Specifically, in the first mode of the first transmission mode, the interface device 1000 may perform frame counting based on the header data received through some lane (e.g., first lane CH0), and may generate update time information of the image frame based on the frame counting. Accordingly, the image display apparatus 100 may reduce power consumption while maintaining encryption authentication.

Meanwhile, in the second mode of the first transmission mode, the interface device 1000 may further include: a second decoder 1010 configured to decode data from the plurality of lanes CH0 to CH3; a second descrambler 1012 configured to descramble data from the second decoder 1010; an unpacker 1014 unpacker configured to unpack data from the second descrambler 1012; and a deframer 1016 configured to deframe data from the unpacker 1014.

Meanwhile, in the second mode of the first transmission mode, the deframer 1016 may output a sync signal and image data.

Meanwhile, in the second mode of the first transmission mode, the signal selector 1039 may receive a sync signal, and may output the sync signal to the encryption authenticator 1020.

Meanwhile, in the second mode of the first transmission mode, the encryption authenticator 1020 may maintain or perform encryption authentication again based on the sync signal and the image data from the deframer 1016. Accordingly, encryption authentication may be maintained.

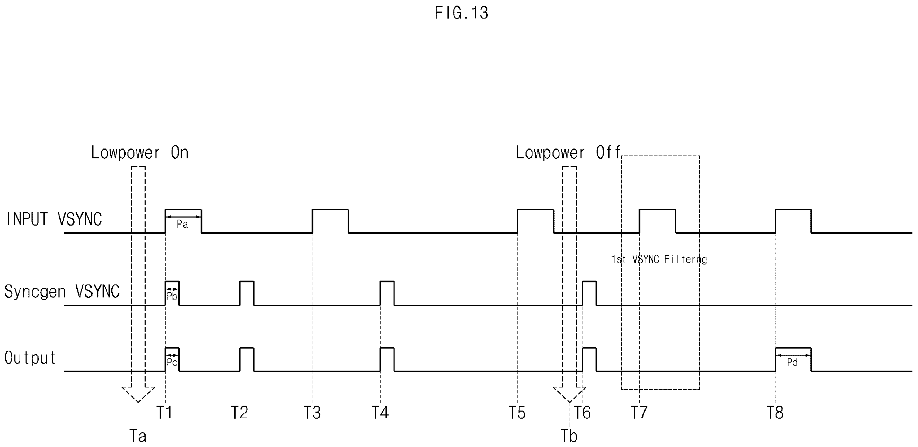

FIG. 13 is a diagram referred to in the description of operation of FIG. 12.

FIG. 13 is a diagram illustrating an example in which in the first mode of the first transmission mode, the interface device 1000 of FIG. 12 is switched to the second mode of operation.

Referring to the drawing, an example is illustrated in which the first mode of operation is turned on at time Ta during the first transmission mode, and at time Tb, the first mode of operation is turned off and the second mode of operation is turned on.

Meanwhile, in the first mode of the first transmission mode, the interface device 1000 may generate a vertical sync (VSync) signal for synchronization Syncgen VSYNC in response to an input vertical sync signal input VSYNC, and may output an output vertical sync signal Output based on the vertical sync signal for synchronization Syncgen VSYNC.

For example, in response to a pulse of the input vertical sync signal input VSYNC, a pulse may be output to each of the vertical sync signal for synchronization Syncgen VSYNC and the output vertical sync signal Output at time T1 after time Ta.

Then, at time T2 after time T1, a pulse may be output to each of the vertical sync signal for synchronization Syncgen VSYNC and the output vertical sync signal Output, although the input vertical sync signal input VSYNC is at a low level.

Then, at time T3 after time T2, in response to the pulse of the input vertical sync signal input VSYNC, a pulse may be output to each of the vertical sync signal for synchronization Syncgen VSYNC and the output vertical sync signal Output.

Then, at time T4 after time T3, a pulse may be output to each of the vertical sync signal for synchronization Syncgen VSYNC and the output vertical sync signal Output, although the input vertical sync signal input VSYNC is at a low level.

Then, at time T5 after time T4, the pulse of the input vertical sync signal input VSYNC is input, but at time Tb immediately after time T5, the first mode of operation is turned off and the second mode of operation is turned on.

Meanwhile, at time T6 after time Tb, a pulse may be output to each of the vertical sync signal for synchronization Syncgen VSYNC and the output vertical sync signal Output, although the input vertical sync signal input VSYNC is at a low level.

Then, at time T7 after time T6, the vertical sync signal for synchronization Syncgen VSYNC and the output vertical sync signal Output may remain at a low level, despite the pulse of the input vertical sync signal input VSYNC.

Then, at time T8 after time T7, in response to the pulse of the input vertical sync signal input VSYNC, a pulse may be output to the output vertical sync signal Output.

Meanwhile, in the first mode of the first transmission mode, the interface device 1000 may generate a first vertical sync signal based on received data and output the first vertical sync signal, and if the first mode of operation is switched to the second mode of operation in the first mode of the first transmission mode, the interface device 1000 may bypass the first vertical sync signal which is output at a time after the mode of operation is switched, such as time Tb, or a final first vertical sync signal.

Meanwhile, in the first mode of the first transmission mode, the interface device 1000 may generate a first vertical sync signal based on received data and output the first vertical sync signal, and in the second mode of the first transmission mode, the interface device 1000 may extract a second vertical sync signal based on image data received through the plurality of lanes CH0 to CH3, in which a pulse width of the first vertical sync signal may be less than a pulse width of the second vertical sync signal.

Meanwhile, the vertical sync signal for synchronization Syncgen VSYNC preferably has a smaller pulse width than a pulse width of the input vertical sync signal input VSYNC, due to Valid Sync Data except gap data.

In the drawing, an example is illustrated in which a pulse width of the input vertical sync signal input VSYNC is Pa, a pulse width of the vertical sync signal for synchronization Syncgen VSYNC is Pb which is less than Pa, and a pulse width of the output vertical sync signal Output is Pc which is less than Pa.

Meanwhile, unlike the example of FIG. 13, the interface device 1000 may control a position of the vertical sync signal for synchronization Syncgen VSYNC not to be fixed but vary, in consideration of characteristics of the FRL mode which is the first transmission mode.

For example, the interface device 1000 may control the vertical sync signal for synchronization Syncgen VSYNC to be positioned ahead of or behind the input vertical sync signal input VSYNC.

Meanwhile, if the vertical sync signal for synchronization Syncgen VSYNC is positioned ahead of the input vertical sync signal input VSYNC, the interface device 1000 may remove the input vertical sync signal input VSYNC once by masking, at a time when the first mode of operation is switched to the second mode of operation in the first mode of the first transmission mode. Accordingly, the vertical sync signal for synchronization Syncgen VSYNC and the input vertical sync signal input VSYNC may be accurately matched.

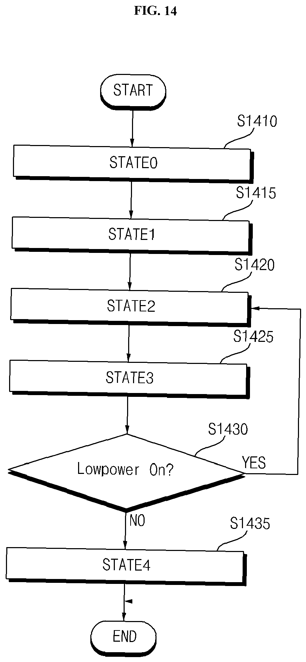

FIG. 14 is a flowchart illustrating an example of an operating method of the interface device of FIG. 12.

Referring to the drawing, in operation STATE0 (S1410), the interface device 100 may be in an idle state.

Then, in operation STATE1 (S1415), if a low power mode, which is the first mode of operation, is turned on, the interface device 100 may detect the input vertical sync signal input VSYNC, and perform a subsequent operation.

Then, in operation STATE2 (S1420), the interface device 100 may output Valid Sync Data, except gap data, based on the detected input vertical sync signal input VSYNC.

Further, in operation STATE2 (S1420), the interface device 100 may output a frame sync signal.

Meanwhile, in operation STATE2 (S1420), the interface device 100 may turn on some lane among the plurality of lanes CH0 to CH3 and turn off the other lanes in the first mode of the first transmission mode.

For example, in the first mode of the first transmission mode, the interface 100 may turn on only the first lane CH0 among the plurality of lanes CH0 to CH3.

In another example, in the first mode of the first transmission mode, the interface 100 may turn on only the second lane CH1, the third lane CH2, or the fourth lane CH3 among the plurality of lanes CH0 to CH3.

Alternatively, in operation STATE2 (S1420), the interface device 100 may turn off all the plurality of lanes CH0 to CH3 in the first mode of the second transmission mode.

Then, in operation STATE3 (S1425), the interface device 100 waits for a frame update signal while outputting gap data.

Meanwhile, while receiving the frame update signal, the interface device 100 determines whether the interface device 100 still operates in the first mode of operation, and if so, the interface device 100 performs operation STATE2 (S1420).

Meanwhile, while receiving the frame update signal, if the mode of operation is not the first mode of operation, the interface device 100 performs operation STATE4 (S1435).

Meanwhile, in operation STATE4 (S1435), the interface device 100 checks whether the input vertical sync signal input VSYNC is stable, and switches an output to the input vertical sync signal input VSYNC.

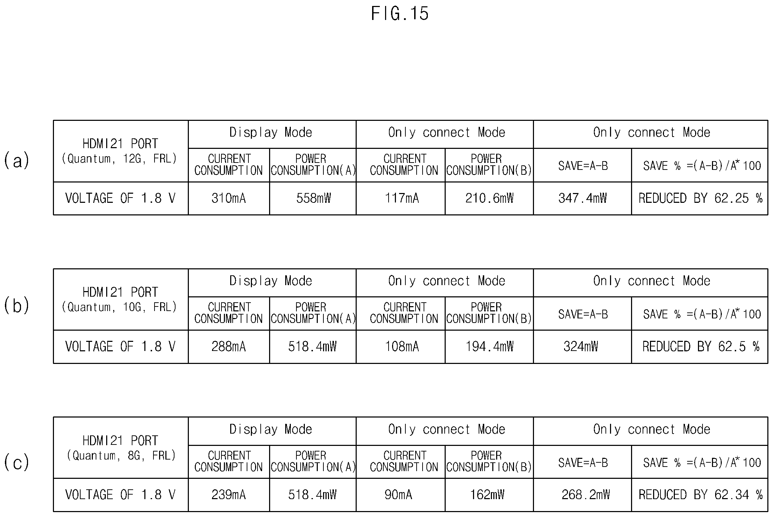

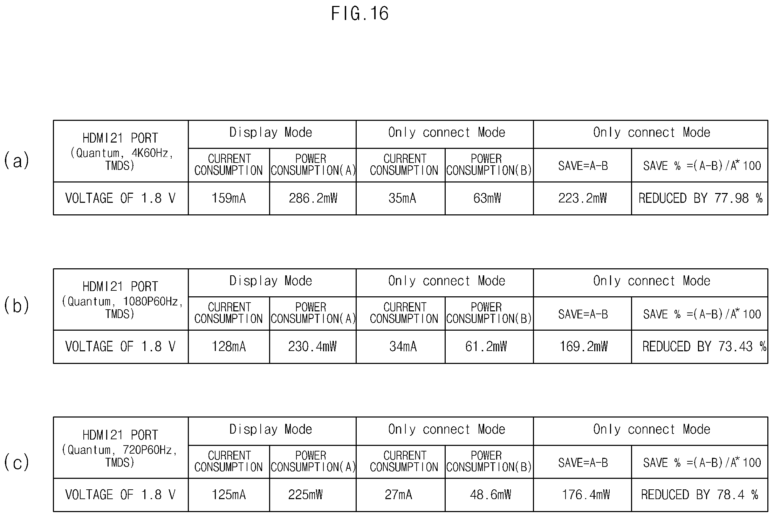

FIGS. 15 and 16 are diagrams referred to in the description of operation of the interface device of FIG. 12.

First, FIG. 15 illustrates an example in which an HDMI 2.1 port of the interface device 1000 of the image display apparatus 100 operates in the FRL mode which is the first transmission mode.

Referring to the drawing, (a) of FIG. 15 illustrates current consumption and power consumption in a normal mode or a display mode, which is the second mode of operation, and in a low power mode, which is the first mode of operation, when first frame data of approximately 12 G-Bytes is received in the case where a DC voltage of 1.8 V is applied to the HDMI 2.1 port of the interface device 1000 of the image display apparatus 100.

It can be seen that in the first mode of operation compared to the second mode of operation, power consumption is reduced by approximately 62.5 %.

In FIG. 15, (b) illustrates current consumption and power consumption in a normal mode or a display mode, which is the second mode of operation, and in a low power mode, which is the first mode of operation, when second frame data of approximately 10 G-Bytes is received in the case where a DC voltage of 1.8 V is applied to the HDMI 2.1 port of the interface device 1000 of the image display apparatus 100.

It can be seen that in the first mode of operation compared to the second mode of operation, power consumption is reduced by approximately 62.5 %.

In FIG. 15, (c) illustrates current consumption and power consumption in a normal mode or a display mode, which is the second mode of operation, and in a low power mode, which is the first mode of operation, when third frame data of approximately 8 G-Bytes is received in the case where a DC voltage of 1.8 V is applied to the HDMI 2.1 port of the interface device 1000 of the image display apparatus 100.

It can be seen that in the first mode of operation compared to the second mode of operation, power consumption is reduced by approximately 62.34 %.

Then, FIG. 16 illustrates an example in which an HDMI 2.1 port of the interface device 1000 of the image display apparatus 100 operates in the TMDS mode which is the second transmission mode.

Referring to the drawing, (a) of FIG. 16 illustrates current consumption and power consumption in a normal mode or a display mode, which is the second mode of operation, and in a low power mode, which is the first mode of operation, when fourth frame data of approximately 4K is received in the case where a DC voltage of 1.8 V is applied to the HDMI 2.1 port of the interface device 1000 of the image display apparatus 100.

It can be seen that in the first mode of operation compared to the second mode of operation, power consumption is reduced by approximately 77.98 %.

In FIG. 16, (b) illustrates current consumption and power consumption in a normal mode or a display mode, which is the second mode of operation, and in a low power mode, which is the first mode of operation, when fifth frame data of approximately 1080P is received in the case where a DC voltage of 1.8 V is applied to the HDMI 2.1 port of the interface device 1000 of the image display apparatus 100.

It can be seen that in the first mode of operation compared to the second mode of operation, power consumption is reduced by approximately 73.43 %.

In FIG. 16, (c) illustrates current consumption and power consumption in a normal mode or a display mode, which is the second mode of operation, and in a low power mode, which is the first mode of operation, when third frame data of approximately 8 G-Bytes is received in the case where a DC voltage of 1.8 V is applied to the HDMI 2.1 port of the interface device 1000 of the image display apparatus 100.

It can be seen that in the first mode of operation compared to the second mode of operation, power consumption is reduced by approximately 78.4 %.

As described above, an image display apparatus according to an embodiment of the present disclosure comprises: a display; an interface including at least one port and configured to receive a video signal from an external electronic device connected to the port; and a signal processing device configured to display an image corresponding to the video signal received from the interface on the display, wherein in a first mode of a first transmission mode, the interface is configured to turn on some lane and turn off other lanes among a plurality of lanes, generate update time information of an image frame based on data received through the some lane, and maintain encryption authentication based on the update time information of the image frame. Accordingly, power consumption may be reduced while maintaining encryption authentication. Further, external input switching may be rapidly performed.

Meanwhile, in the first mode of the first transmission mode, the interface may be configured to turn on some lane and turn off other lanes among a plurality of lanes, generate update time information of the image frame based on header data among the data received through the some lane, and maintain encryption authentication based on the update time information of the image frame. Accordingly, power consumption may be reduced while maintaining encryption authentication.

Meanwhile, in the first mode of the first transmission mode, the interface may be configured to turn on some lane and turn off other lanes among a plurality of lanes, generate update time information of the image frame based on map character information in data received through the some lane, and maintain encryption authentication based on the update time information of the image frame. Accordingly, power consumption may be reduced while maintaining encryption authentication.

Meanwhile, in the first mode of the first transmission mode, the interface may be configured to turn on a first lane and turn off other lanes among a plurality of lanes, generate update time information of the image frame based on map character information in header data received through the first lane, and maintain encryption authentication based on the update time information of the image frame. Accordingly, power consumption may be reduced while maintaining encryption authentication.

Meanwhile, in response to the encryption authentication being failed, the interface may be configured to perform encryption authentication again. Accordingly, signals may be stably received.

Meanwhile, the interface may be configured to: in response to the encryption authentication being failed or at a time of initial authentication, transmit a first public key to the external electronic device; receive a second public key from the external electronic device; generate a secure key based on the second public key; and encrypt a message based on the secure key and transmit the encrypted message to the external electronic device. Accordingly, signals may be stably received.

Meanwhile, in a second mode of the first transmission mode, the interface may be configured to turn on all the plurality of lanes, and maintain encryption authentication based on image data received through the plurality of lanes. Accordingly, encryption authentication may be maintained.

Meanwhile, the interface may be configured to operate with less power in the first mode of the first transmission mode than in the second mode of the first transmission mode. Accordingly, power consumption may be reduced while maintaining encryption authentication.

Meanwhile, while operating in a first mode of operation during a second transmission mode, the interface may be configured to turn off all the plurality of lanes, and maintain encryption authentication based on previously stored vertical sync signal information or frame rate information. Accordingly, power consumption may be reduced while maintaining encryption authentication.

Meanwhile, in a second mode of the second transmission mode, the interface may be configured to maintain encryption authentication based on at least one of a video signal or a clock signal received through the plurality of lanes. Accordingly, encryption authentication may be maintained.

Meanwhile, the interface may be configured to operate with less power in the first mode of the second transmission mode than in the second mode of the second transmission mode. Accordingly, power consumption may be reduced while maintaining encryption authentication.

Meanwhile, the interface may be configured to receive higher resolution image data in the first transmission mode than in the second transmission mode. Accordingly, high-resolution image data may be received.

Meanwhile, the interface may include: a decoder configured to decode data received from the some lane in the first mode of the first transmission mode; a descrambler configured to descramble data from the decoder; an update time detector configured to generate update time information of an image frame based on data from the descrambler; a sync signal generator configured to output a sync signal and an encryption enable signal based on the update time information of the image frame from the update time detector; and a encryption authenticator configured to maintain or perform encryption authentication again based on the sync signal and the encryption enable signal from the sync signal generator. Accordingly, power consumption may be reduced while maintaining encryption authentication.

Meanwhile, the interface may further include: a second decoder configured to decode data from the plurality of lanes in the second mode of the first transmission mode; a second descrambler configured to descramble data from the second decoder; an unpacker configured to unpack data from the second descrambler; and a deframer configured to deframe data from the unpacker, wherein in the second mode of the first transmission mode, the encryption authenticator may be configured to maintain or perform encryption authentication again based on the image data and the sync signal from the deframer. Accordingly, encryption authentication may be maintained.

Meanwhile, in the first mode of the first transmission mode, the interface may be configured to turn on the first lane and turn off other lanes among the plurality of lanes, and perform frame counting based on header data received through the first lane. Accordingly, power consumption may be reduced while maintaining encryption authentication.

Meanwhile, in the second mode of the first transmission mode, the interface may be configured to turn on the plurality of lanes, separate pixel data and gap data among data received through the plurality of lanes, and store sync information generated based on the pixel data. Accordingly, encryption authentication may be maintained.

Meanwhile, in the first mode of the first transmission mode, the interface may be configured to generate a first vertical sync signal based on the received data and output the first vertical sync signal; and in response to switching from the first mode of the first transmission mode to the second mode of the first transmission mode, the interface may be configured to bypass a first vertical sync signal, which is output after the switching, or a final first vertical sync signal. Accordingly, power consumption may be reduced while maintaining encryption authentication.

Meanwhile, the interface may be configured to: in the first mode of the first transmission mode, generate a first vertical sync signal based on the received data and output the first vertical sync signal; and in the second mode of the first transmission mode, extract a second vertical sync signal based on image data received through the plurality of lanes, wherein a pulse width of the first vertical sync signal may be less than a pulse width of the second vertical sync signal. Accordingly, power consumption may be reduced while maintaining encryption authentication.

Meanwhile, an image display apparatus according to another embodiment of the present disclosure comprises: a display; an interface including at least one port, and configured to receive a video signal from an external electronic device connected to the port; and a signal processing device configured to display an image corresponding to the video signal received from the interface on the display, wherein the interface is configured to: in a first mode of a first transmission mode, maintain encryption authentication based on data received through some lanes among a plurality of lanes; and in a second mode of the first transmission mode, maintain encryption authentication based on image data received through the plurality of lanes. Accordingly, power consumption may be reduced while maintaining encryption authentication. Further, external input switching may be rapidly performed.

Meanwhile, an interface device according to yet another embodiment of the present disclosure comprises: a decoder configured to decode data received from some lane among a plurality of lanes in a first mode of a first transmission mode; a descrambler configured to descramble data from the decoder; an update time detector configured to generate update time information of an image frame based on data from the descrambler; a sync signal generator configured to output a sync signal and an encryption enable signal based on the update time information of the image frame from the update time detector; and a encryption authenticator configured to maintain or perform encryption authentication again based on the sync signal and the encryption enable signal from the sync signal generator Accordingly, power consumption may be reduced while maintaining encryption authentication. Further, external input switching may be rapidly performed.

Meanwhile, the interface device may further include: a second decoder configured to decode data from the plurality of lanes in a second mode of the first transmission mode; a second descrambler configured to descramble data from the second decoder; an unpacker configured to unpack data from the second descrambler; and a deframer configured to deframe data from the unpacker, wherein in the second mode of the first transmission mode, the encryption authenticator may be configured to maintain or perform encryption authentication again based on the image data and the sync signal from the deframer. Accordingly, encryption authentication may be maintained.

It will be apparent that, although the preferred embodiments have been illustrated and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. An image display apparatus (100) comprising:
a display (180);
an interface (130a) including at least one port and configured to receive a video signal from an external electronic device connected to the port; and
a signal processing device (170) configured to display an image corresponding to the video signal received from the interface on the display,
wherein in a first mode of a first transmission mode, the interface is configured to turn on some lane and turn off other lanes among a plurality of lanes, generate update time information of an image frame based on data received through the some lane, and maintain encryption authentication based on the update time information of the image frame.

2. The image display apparatus of claim 1, wherein in the first mode of the first transmission mode, the interface (130a) is configured to turn on some lane and turn off other lanes among a plurality of lanes, generate update time information of the image frame based on header data among the data received through the some lane, and maintain encryption authentication based on the update time information of the image frame.

3. The image display apparatus of claim 1, wherein in the first mode of the first transmission mode, the interface (130a) is configured to turn on a first lane and turn off other lanes among a plurality of lanes, generate update time information of the image frame based on map character information in header data received through the first lane, and maintain encryption authentication based on the update time information of the image frame.

4. The image display apparatus of any one of claims 1 to 3, wherein in response to the encryption authentication being failed, the interface (130a) is configured to perform encryption authentication again.

5. The image display apparatus of any one of claims 1 to 4, wherein the interface (130a) is configured to:
in response to the encryption authentication being failed or at a time of initial authentication, transmit a first public key to the external electronic device;
receive a second public key from the external electronic device;
generate a secure key based on the second public key; and
encrypt a message based on the secure key and transmit the encrypted message to the external electronic device.

6. The image display apparatus of any one of claims 1 to 5, wherein in a second mode of the first transmission mode, the interface (130a) is configured to turn on all the plurality of lanes, and maintain encryption authentication based on image data received through the plurality of lanes.

7. The image display apparatus of claim 6, wherein the interface (130a) is configured to operate with less power in the first mode of the first transmission mode than in the second mode of the first transmission mode.

8. The image display apparatus of any one of claims 1 to 7, wherein while operating in a first mode of operation during a second transmission mode, the interface (130a) is configured to turn off all the plurality of lanes, and maintain encryption authentication based on previously stored vertical sync signal information or frame rate information.

9. The image display apparatus of claim 8, wherein in a second mode of the second transmission mode, the interface (130a) is configured to maintain encryption authentication based on at least one of a video signal or a clock signal received through the plurality of lanes.

10. The image display apparatus of any one of claims 1 to 9, wherein the interface (130a) comprises:
a decoder (1031) configured to decode data received from the some lane in the first mode of the first transmission mode;
a descrambler (1033) configured to descramble data from the decoder;
an update time detector (1035) configured to generate update time information of an image frame based on data from the descrambler;
a sync signal generator (1037) configured to output a sync signal and an encryption enable signal based on the update time information of the image frame from the update time detector; and
a encryption authenticator (1020) configured to maintain or perform encryption authentication again based on the sync signal and the encryption enable signal from the sync signal generator.

11. The image display apparatus of claim 10, wherein the interface (130a) further comprises:
a second decoder (1010) configured to decode data from the plurality of lanes in the second mode of the first transmission mode;
a second descrambler (1012) configured to descramble data from the second decoder;
an unpacker (1014) configured to unpack data from the second descrambler; and
a deframer (1016) configured to deframe data from the unpacker,
wherein in the second mode of the first transmission mode, the encryption authenticator (1020) is configured to maintain or perform encryption authentication again based on the image data and the sync signal from the deframer.

12. The image display apparatus of claim 1, wherein in the first mode of the first transmission mode, the interface (130a) is configured to turn on the first lane and turn off other lanes among the plurality of lanes, and perform frame counting based on header data received through the first lane.

13. The image display apparatus of claim 1, wherein in the second mode of the first transmission mode, the interface is configured to turn on the plurality of lanes, separate pixel data and gap data among data received through the plurality of lanes, and store sync information generated based on the pixel data.

14. The image display apparatus of claim 6, wherein:
in the first mode of the first transmission mode, the interface (130a) is configured to generate a first vertical sync signal based on the received data and output the first vertical sync signal; and
in response to switching from the first mode of the first transmission mode to the second mode of the first transmission mode, the interface is configured to bypass a first vertical sync signal, which is output after the switching, or a final first vertical sync signal.

15. The image display apparatus of claim 6, wherein the interface (130a) is configured to:
in the first mode of the first transmission mode, generate a first vertical sync signal based on the received data and output the first vertical sync signal; and
in the second mode of the first transmission mode, extract a second vertical sync signal based on image data received through the plurality of lanes,
wherein a pulse width of the first vertical sync signal is less than a pulse width of the second vertical sync signal.
